# EUROPÄISCHE PATENTSCHRIFT

(11) **EP 1 068 458 B1**
(45) Veröffentlichungstag und Bekanntmachung des Hinweises auf die Patenterteilung: **15.01.2003**
(21) Anmeldenummer: 99919174.5
(22) Anmeldetag: 01.04.1999
(51) Int. Cl.: F16B 37/06, F16B 19/10, F16B 19/05

(54) **VERBINDUNGSEINRICHTUNG ZUM VERBINDEN ZWEIER BAUTEILE, KOMBINATION DER VERBINDUNGSEINRICHTUNG MIT DEN BEIDEN BAUTEILEN UND VERFAHREN ZUR HERSTELLUNG EINER VERBINDUNG ZWISCHEN ZWEI BAUTEILEN**
JOINING DEVICE FOR JOINING TWO STRUCTURAL PARTS, THE COMBINATION OF THE JOINING DEVICE WITH THE TWO STRUCTURAL PARTS AND METHOD FOR PRODUCING A JOINT BETWEEN TWO STRUCTURAL PARTS
DISPOSITIF D'ASSEMBLAGE POUR LA JONCTION DE DEUX COMPOSANTS, COMBINAISON DU DISPOSITIF D'ASSEMBLAGE AVEC LES DEUX COMPOSANTS ET PROCEDE D'OBTENTION D'UNE JONCTION ENTRE DEUX COMPOSANTS

(30) Priorität: 06.04.1998 DE 19815407
(43) Veröffentlichungstag der Anmeldung: 17.01.2001
(73) Patentinhaber: Profil Verbindungstechnik GmbH & Co. KG, 61381 Friedrichsdorf (DE)
(72) Erfinder: MÜLLER, Rudolf, D-60437 Frankfurt am Main (DE); VIETH, Michael, D-61118 Bad Vilbel (DE); BABEY, Jiri, D-35423 Lich (DE); BROICH, Hans, D-82194 Gröbenzell (DE)
(74) Vertreter: Manitz, Finsterwald & Partner GbR
(86) Internationale Anmeldenummer: EP9902236
(87) Internationale Veröffentlichungsnummer: WO99051886

(56) Entgegenhaltungen:
- FR-A- 2 256 687
- US-A- 3 614 702

## Beschreibung

Die vorliegende Erfindung befaßt sich mit einer Verbindungseinrichtung, die an ihrem einen Ende über eine umformtechnisch herstellbare Verbindung, vorzugsweise eine Nietverbindung, an einem ersten Bauteil befestigt bzw. befestigbar ist, und einen Aufnahmebereich aufweist, der zur Aufnahme eines Bolzens, einer Mutter oder eines anderen Elements, beispielsweise ein Bajonettteil oder eine Welle ausgelegt bzw. auslegbar ist. Ferner betrifft die vorliegende Erfindung eine Kombination einer solchen Verbindungseinrichtung mit einem, zwei oder drei Bauteilen und ein Verfahren zur Herstellung einer Verbindung zwischen einem ersten und zweiten Bauteil unter Anwendung einer solchen Verbindungseinrichtung.

Eine Verbindungseinrichtung der eingangs genannten Art ist aus mehreren Schriften bekannt. Beispielsweise offenbart das europäische Patent 0 539 793 ein Mutterelement, das in ein Bauteil, insbesondere in ein Blechteil mittels eines als Klemmlochnieten bezeichneten Verfahrens formund kraftschlüssig eingebracht werden kann. Auch sind aus den deutschen Patenten P 30 03 908 bzw. P 34 47 006 Stanzbolzen bekannt, die in ein in Form eines Blechteils vorliegenden Bauteils selbststanzend eingebracht werden können, wobei die Formmerkmale, die den sogenannten Stanz- und Nietabschnitt des Bolzenelementes bilden, auf der dem Schaftteil des Bolzenelementes abgewandten Seite des Kopfes vorgesehen sind, so daß nach Einbringung des Bolzenelementes von einer Seite in ein Bauteil der Schaftteil des Bolzenelementes sich auf dieser Seite vom Blechteil weg erstreckt.

Auch sind Bolzenelemente bekannt, die in einem vorgelochten Bauteil einsetzbar sind und über eine umformtechnisch herstellbare Verbindung im Bereich unmittelbar unterhalb des Kopfes des Bolzenelementes mit dem Bauteil befestigbar sind. Solche Bolzenelemente sind beispielsweise in der deutschen Patentanmeldung P 44 10 475 beschrieben. Sie können aber auch selbststanzend ausgeführt werden, wie beispielsweise in der deutschen Patentanmeldung der Anmelder 195 35 537.7 angegeben. Bei solchen sogenannten EBF-Bolzen bzw. selbststanzenden EBF-Bolzen ist nach Fertigstellung der Verbindung mit dem Bauteil der Kopf des Bolzenelements auf der einen Seite des Bauteils angeordnet, das Schaftteil mit Gewinde befindet sich auf der anderen Seite des Bauteils.

Im Grunde genommen eignen sich alle Elemente aus dem Lieferprogramm der Firma Profil Verbindungstechnik GmbH & Co. KG, d.h. RND-, RSN-, HI-, RSF-, RSK-, UM-, RSU- und FUN-Mutterelemente sowie EBF-, SBKund SBF-Bolzenelemente für die vorliegende Erfindung. Es können auch ohne weiteres beinahe alle Fügeelemente, die für eine umformtechnische Verbindung mit einem Bauteil bzw. einem Blechteil im Stand der Technik bekannt sind, auch für die Zwecke der vorliegenden Erfindung benutzt werden.

Im Grunde genommen berücksichtigt der Gattungsbegriff der vorliegenden Anmeldung, der sich mit einer Verbindungseinrichtung befaßt, alle solche Fügeelemente.

Für weitere Angaben zu den verschiedenen Fügeelementen der Firma Profil, die sich für die Anwendung bei der vorliegenden Erfindung eignen, und zu den Herstellungs- und Einsetzverfahren, die dafür in Frage kommen, wird auf folgende deutsche Patente bzw. Patentanmeldungen verwiesen: P 34 04 118, P 30 03 908, P 34 46 978, P 34 47 006, P 35 24 306, P 36 10 675, P 38 35 566, P 34 48 219, P 42 14 717, P 35 83 663, P 42 31 715, P 34 39 583, P 689 08 903, P 691 01 491, P 44 10 475, P 42 11 278, P 42 11 276, P 43 10 953, P 44 20 426, P 44 29 737, 196 00 290.7, 195 35 537, 195 30 466, P 44 40 620, 196 47 831 und P 29 47 179.2. Auch die verschiedensten anderen Schutzrechte der Firma Profil Verbindungstechnik GmbH & Co. KG können hier noch genannt werden.

Bei allen vorgenannten Fügeelementen handelt es sich um solche, die in ein Blechteil oder ggf. in mehrere, aneinander liegende Blechteile eingesetzt werden können und dann das Anschrauben eines weiteren Blechteils ermöglichen. Das Anschrauben erfolgt mittels eines Bolzens bzw. einer Mutter, der bzw. die in einem als Mutterelement ausgebildeten Fügeelement oder auf einem als Bolzen ausgebildetes Fügeelement ein- bzw. aufgeschraubt wird.

Es besteht in der Blechverarbeitungsindustrie, aber auch in anderen Industriezweigen, zunehmend die Notwendigkeit, ein stark belastetes Bauteil, wie beispielsweise eine Achsbefestigung oder ein Türscharnier bei einem PKW, an einem anderen Bauteil, beispielsweise ein aus mehreren Blechteilen zusammengesetzter Holm, anzuschrauben, und zwar derart, daß eine äußerst stabile Befestigung entsteht. Solche stabilen Befestigungen lassen sich, vor allem im Hinblick auf den Trend zu dünnwandigen Blechen, für die Erzeugung solcher Holmteile nur mit größerem Aufwand erreichen.

Eine Möglichkeit, die Stabilität der Anbringung zu verbessern, besteht darin, zwischen zwei, voneinander einen Abstand aufweisenden Bauteilen, ein Distanzrohr einzusetzen und die Verschraubung über das Distanzrohr zu erreichen. Auf diese Weise versteifen sich die zwei, über das Distanzrohr gekoppelten Blechteile gegenseitig. Außerdem werden Bewegungen des Distanzrohres gegenüber dem einen oder anderen Blechteil durch die Anbringung des Distanzrohres an beiden Enden unterbunden, was der Stabilität der Verbindung zum Anschraubteil zugute kommt.

Solche Distanzrohrverbindungen, siehe z.B. die DE-C-39 36 376, sind jedoch bisher mittels Schweißverfahren realisiert worden. Dies bringt jedoch den Nachteil mit sich, daß die Positionsgenauigkeit der Bleche zueinander sehr gering ist und die in der Regel hohen dynamischen Dauerbelastungen von den Schweißverbindungen nicht ohne weiteres getragen werden können. Darüber hinaus ist die Wärmeentwicklung während eines Schweißverfahrens bei der Verwendung von hochfesten, legierten Blechen mit den Festigkeitsanforderungen nicht kompatibel.

Die Aufgabe der vorliegenden Erfindung liegt darin, eine Verbindungseinrichtung vorzusehen, die sich mit der herkömmlichen Blechverarbeitung ohne weiteres verbinden läßt, die in der Ausführung kostengünstig ist und die eine hochstabile Anbringung eines dritten Bauteils an einem aus dem ersten und zweiten Bauteil und der Verbindungseinrichtung bestehenden Verbundteil herstellen läßt.

Zur Lösung dieser Aufgabe wird erfindungsgemäß eine Verbindungseinrichtung der eingangs genannten Art vorgesehen, die sich dadurch auszeichnet, daß sie in einem, dem erstgenannten Ende beabstandeten Bereich zur Anbringung an oder in ein zweites Bauteil ausgelegt ist, wobei nach Fertigstellung einer Verbindung mit dem ersten Bauteil und nach Anbringung des zweiten Bauteils der Aufnahmebereich die Anbringung eines weiteren Bauteils ermöglicht. Dabei kann der beabstandete Bereich am dem erstgenannten Ende entgegengesetzten Ende der Verbindungseinrichtung vorgesehen sein. Er kann aber auch beispielsweise in der Mitte der Verbindungseinrichtung vorliegen, so daß das andere Ende der Verbindungseinrichtung über das zweite Bauteil hinausragt.

An dieser Stelle soll kurz auf die US-A-3,614,702 hingewiesen werden. Diese zeigt ein Niet, das zwischen seinem Kopfteil und seinem Nietbordel mehrere Bauteile zusammenhält, wobei auch eine Abstandshülse vorgesehen ist. Das Niet weist jedoch keinen Aufnahmebereich auf, der die Anbringung eines weiteren Bauteils ermöglicht.

Es bestehen verschiedene Möglichkeiten für die Anbringung der Verbindungseinrichtung im beabstandeten Bereich an das zweite Bauteil. Beispielsweise kann der beabstandete Bereich mit Vorteil als Blindniethülse ausgelegt sein. Es kann aber auch für eine umformtechnische Anbringung an das zweite Bauteil ausgelegt sein, wobei es je nach konkrete Ausbildung auch schließlich in Frage käme, den beabstandeten Bereich so auszulegen, daß er sich zum Anschweißen bzw. Ankleben am zweiten Bauteil eignet.

Dabei kann die Verbindungseinrichtung einteilig oder mehrteilig ausgeführt werden. Die einteilige Ausführung ist einerseits einfach handzuhaben, hat jedoch den Nachteil, daß die Länge der Verbindungseinrichtung stets dem jeweiligen Zweck angepaßt werden muß, was die Lagerhaltung erschwert. Eine mehrteilige Ausführung ermöglicht es aber, solche Lagerprobleme in den Griff zu bekommen - beispielsweise dadurch, daß die zwei Enden der Verbindungseinrichtung durch standardmäßig vorhandene Fügeelemente gebildet sind, die jeweils umformtechnisch mit dem zugeordneten Blechteil verbunden werden können, während ein als Distanzrohr zu bezeichnendes Mittelteil je nach Anwendung in verschiedenen Längen angefertigt werden kann.

Besonders bevorzugte Ausführungsformen der Verbindungseinrichtung ergeben sich aus den Unteransprüchen 2 bis 25.

Besondere Kombinationen der Verbindungseinrichtung mit Blechteilen ergeben sich aus den weiteren Ansprüchen 26 bis 31.

Verfahren zur Herstellung einer Verbindung zwischen einem ersten und einem zweiten Bauteil unter Anwendung der erfindungsgemäßen Verbindungseinrichtung ergeben sich aus den Ansprüchen 32 bis 37.

Die Verbindungseinrichtungen nach der vorliegenden Erfindung haben insbesondere folgende Vorteile:
- sie ermöglichen es, das erste und das zweite Bauteil (Blechteile oder Formteile aus anderen Materialien) mit geringen Toleranzen bezüglich der Lage und des Abstands der Formteile zueinander zu positionieren und bilden daher eine Art Lehre beim Zusammenbau der entsprechenden Bauteile;
- sie dienen als Mutter- oder Bolzenelement zum Anschrauben weiterer Bauteile mit hohen Betriebslasten;
- sie dienen der Absicherung der Winkligkeit und - falls erforderlich - der Ausdruck- und Verdrehsicherung bei der Montage;
- sie nehmen Betriebslasten, Scherung, Druckmomente jeweils statisch und dynamisch auf;
- auch bei der mehrteiligen Ausführung stellt der Zusammenhalt der Verbindungseinrichtung kein Problem dar, da die Verschraubung so vorgenommen werden kann, daß alle Elemente der Verbindungseinrichtung gegeneinander abgestützt sind.

Besonders vorteilhaft ist, daß die Scher-, Zug- und Druckkräfte sowie evtl. Drehmomente, die am einen Ende der Verbindungseinrichtung aufgenommen werden müssen, aufgrund der Länge der Verbindungseinrichtung und die durch sie bewirkte Versteifung der Struktur wesentlich besser aufgenommen werden können.

Die Erfindung wird nachfolgend aufgrund von Ausführungsbeispielen und unter Bezugnahme auf die Zeichnungen näher erläutert, die zeigen:
- Fig. 1: eine teilweise geschnittene Ansicht einer ersten Ausführungsvariante der erfindungsgemäßen Verbindungseinrichtung bei der Anwendung mit zwei, aus Blech bestehenden Bauteilen,
- Fig. 2: die gleiche Ausführung wie Fig. 1, jedoch während der Verbindung der zwei Bauteile aneinander,
- Fig. 3: die fertiggestellte Verbindung zwischen den zwei Bauteilen der Fig. 1 und 2,
- Fig. 4: eine teilweise geschnittene Längsansicht einer zweiten erfindungsgemäßen Ausführung einer Verbindungseinrichtung,
- Fig. 5: eine teilweise in Längsrichtung geschnittene Ansicht der Verbindungseinrichtung der Fig. 4 bei der Anwendung mit zwei, aus Blech bestehenden Bauteilen,
- Fig. 6: eine Darstellung ähnlich dem unteren Teil der Fig. 5 bei einer Ausführung, bei der das erste Bauteil aus zwei aneinander gelegten Blechformteilen besteht,
- Fig. 7: eine teilweise geschnittene Darstellung ähnlich der Fig. 5, jedoch für drei verschiedene Längen der erfindungsgemäßen Verbindungseinrichtung gemäß Fig. 4, wobei gleichzeitig das Anschrauben eines dritten Bauteils dargestellt wird,
- Fig. 8: eine teilweise in Längsrichtung geschnittene Ansicht einer bevorzugten, erfindungsgemäßen Ausführung einer Verbindungseinrichtung mit einer Blindniethülse und einem Blindnietdorn,
- Fig. 9: eine Darstellung ähnlich der Fig. 8, jedoch nach dem Einsetzen der erfindungsgemäßen Verbindungseinrichtung zwischen zwei, aus Blech bestehenden Bauteilen, wobei auf der linken Seite der Fig. 9 die Situation vor dem Anziehen der Blindnietverbindung und auf der rechten Seite die Situation nach dem Anziehen der Blindnietverbindung gezeigt ist,
- Fig. 10: eine Darstellung des unteren Teils einer erfindungsgemäßen Verbindungseinrichtung ähnlich der Fig. 8, jedoch in einer etwas abgewandelten Ausbildung,
- Fig. 11: den unteren Teil der Verbindungseinrichtung der Fig. 10 nach Einbringung in ein Blechformteil,
- Fig. 12: eine etwas abgewandelte Ausführungsform der Verbindungseinrichtung der Fig. 8 in einer Darstellung entsprechend der Fig. 9,
- Fig. 13: eine teilweise in Längsrichtung geschnittene Ansicht einer weiteren erfindungsgemäßen Ausführungsform einer Verbindungseinrichtung, welche die bevorzugte Ausführungsform darstellt,
- Fig. 14: eine schematische Darstellung der Verbindungseinrichtung der Fig. 13 in zwei Bauteile eingebaut,
- Fig. 15-21: Darstellungen ähnlich der Fig. 7, jedoch von abgewandelten Ausführungsformen der erfindungsgemäßen Verbindungseinrichtung,
- Fig. 22: eine in Längsrichtung geschnittene Darstellung einer dreiteiligen erfindungsgemäßen Verbindungseinrichtung nach dem Einsetzen in zwei Bauteile,
- Fig. 23: eine Darstellung ähnlich der Fig. 22, jedoch in einer geneigten Lage der Verbindungseinrichtung, und
- Fig. 24: eine in Längsrichtung geschnittene Darstellung einer weiteren erfindungsgemäßen Ausführung einer Verbindungseinrichtung,
- Fig. 25A bis 25D: verschiedene Herstellungsschritte bei dem Einbau einer erfindungsgemäßen Verbindungseinrichtung.

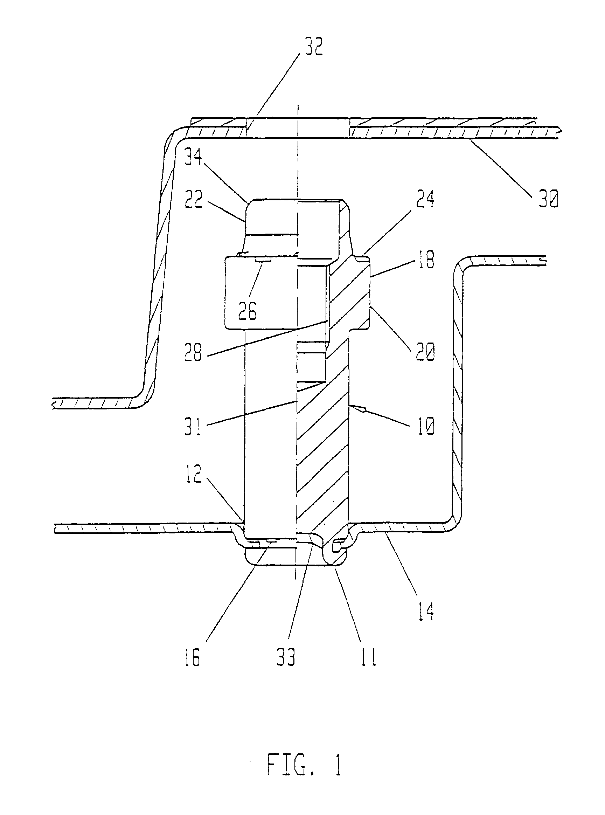

Fig. 1 zeigt zunächst eine erfindungsgemäße Verbindungseinrichtung 10, deren erstes, unteres Ende 12über eine formtechnisch herstellbare Verbindung 11 mit einem ersten Bauteil 14 in Form eines Blechformteils befestigt ist. Die umformtechnisch hergestellte Verbindung erfolgte bei diesem Ausführungsbeispiel entsprechend dem deutschen Patent P 34 47 006. Das heißt, daß die einteilige Verbindungseinrichtung 10 an ihrem unteren, ersten Ende eine Ausbildung aufweist entsprechend der sog. SBF- (Stanzbolzen mit Flansch) Ausführung der Firma Profil Verbindungstechnik GmbH & Co. KG (nachfolgend Firma Profil genannt), die bei der Einstanzung und Vernietung mit dem Bauteil 14 zu der in der Fig. 1 dargestellten Verbindung führt. Ebenfalls ersichtlich aus Fig. 1 sind die sich in Radialrichtung erstreckenden Nasen 16, die eine Verdrehsicherung zwischen der Verbindungseinrichtung 10 und dem ersten Bauteil 14 bilden.

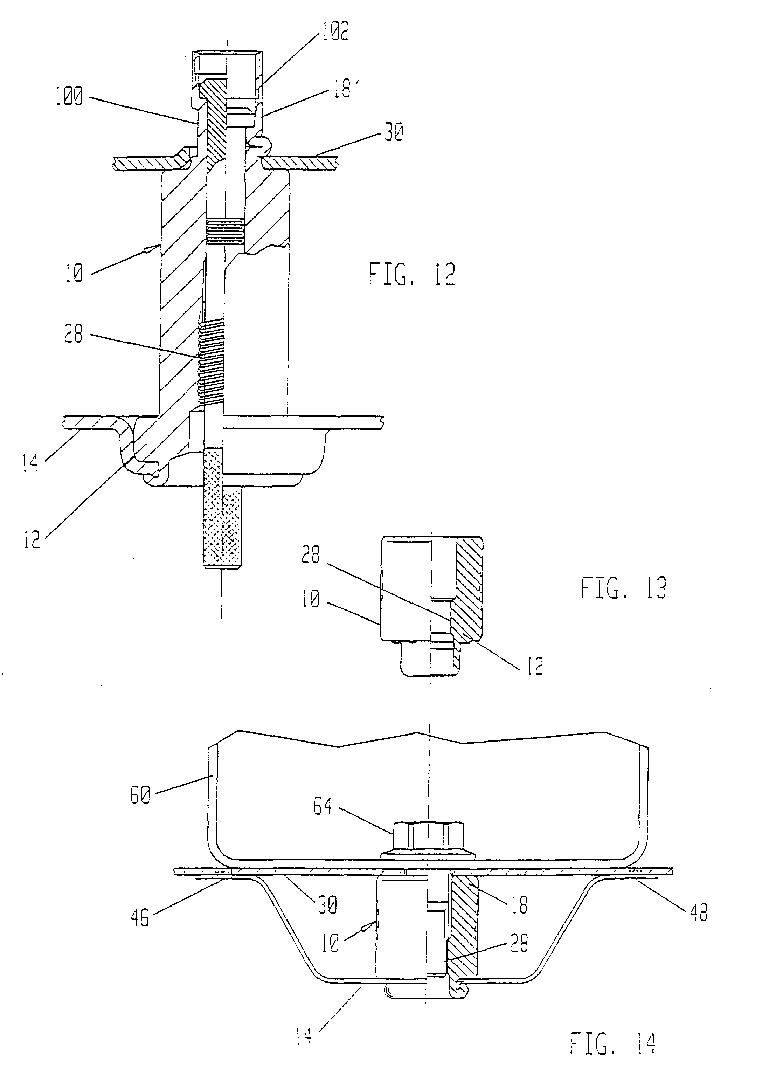

An ihrem oberen, dem erstgenannten Ende 12 entgegengesetzten Ende 18 weist die Verbindungseinrichtung der Fig. 10 eine Ausbildung entsprechend dem RSF-Mutterelement (Rundschultermutter mit Flansch) der Firma Profil auf, die nach dem deutschen Patent P 36 10 675 ausgebildet ist. Im wesentlichen weist das obere Ende 18 der Verbindungseinrichtung 10 daher die Gestalt eines Mutterelements mit einem Flanschteil 20 und mit einem Stanz- und Nietabschnitt 22 auf, der über eine sich im wesentlichen radial erstreckende Schulter 24 in den Flansch 20 übergeht, wobei auch hier Verdrehsicherungsmerkmale 26 im Bereich der Schulter vorgesehen sind. Innerhalb des Flanschteils befindet sich ein Gewindezylinder 28, der sich bei dieser Ausführungsform weiter in Richtung des mittleren Bereichs der Verbindungseinrichtung 10 erstreckt.

Obwohl das obere Ende 18 der Verbindungseinrichtung mit einer selbststandzenden Ausbildung in Form des Stanz- und Nietabschnittes 22 versehen wird, wird bei dieser Ausführungsvariante der Stanz- und Nietabschnitt nicht zum Stanzen benutzt, sondern statt dessen ist das ebenfalls als Blechformteil ausgebildete zweite Bauteil 30 vorgelocht. Das Loch ist bei 32 gezeigt und liegt koaxial zur Längsachse 31 der Verbindungseinrichtung 10 und zur unteren umformtechnischen Verbindung 11 mit dem ersten Bauteil 14.

Es gibt im wesentlichen zwei Gründe, warum der Stanz- und Nietabschnitt 22 hier nicht selbststanzend ausgenutzt wird. In erster Linie besteht ein Problem darin, daß bei Anwendung des Stanz- und Nietabschnittes 22 um das Loch 32 im Bauteil 30 zu stanzen, der Stanzbutzen das obere Ende der Verbindungseinrichtung 10 verschließen und somit den Zugang zum Gewindezylinder verhindern würde. Es wäre allerdings denkbar, den Stanzbutzen anschließend zu entfernen. Hierfür wäre es aber notwendig, die Verbindungseinrichtung 10 hohl auszubilden, damit vom unteren Ende her ein entsprechender Stößel eingeführt werden könnte. Dies ist durchaus realisierbar. Allerdings müßte nach Herstellung der formschlüssigen Verbindung 12 dann der dortige Stanzbutzen 33 erst entfernt werden.

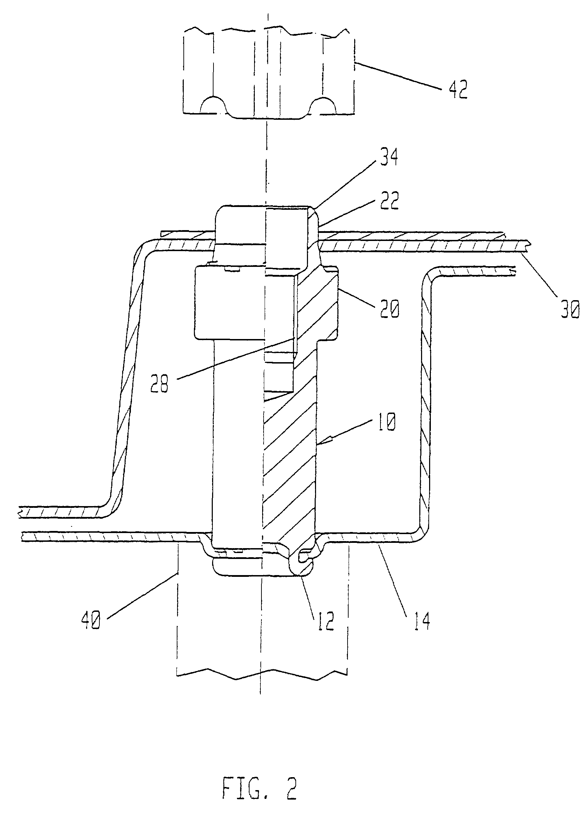

Der zweite Grund, warum hier der Stanz- und Nietabschnitt 22 nicht zum Stanzen des Loches 32 benutzt wird, liegt darin, daß diese selbststanzende Funktion normalerweise nur für Blechdicken bis zu 2 mm benutzt wird. Im Ausführungsbeispiel der Fig. 1 ist jedoch das zweite Bauteil 30 aus zwei übereinander gelegten Blechen gebildet, die eine Gesamtdicke von mehr als 2 mm aufweisen. Es ist jedoch nicht weiter problematisch, daß der Stanz- und Nietabschnitt 22 nicht selbststanzend ausgeführt wird. Statt dessen entsteht sogar ein diesbezüglicher Vorteil, der sich aus einem Vergleich der Fig. 1 und 2 Ausführungen ergibt.

Die gerundete Ziehkante 34 des Stanz- und Nietabschnittes dient nämlich zur Ausrichtung des zweiten Bauteils 30 gegenüber dem ersten Bauteil 14. Im Regelfall wird nicht nur eine Verbindungseinrichtung 10 vorgesehen werden, sondern eine zweite oder mehrere, weitere Verbindungseinrichtungen, die an voneinander beabstandeten Stellen angeordnet werden. Diese können dann die Aufgabe übernehmen, die zwei Bauteile 14 und 30 gegenseitig auszurichten.

Fig. 2 zeigt die Lage nach der Ausrichtung der beiden Bauteile 14 und 30 zueinander und zeigt aber auch eine Matrize 40, die unterhalb des ersten Bauteils 14 angeordnet ist, und eine obere Matrize 42, die im Stempel eines Setzkopfes angeordnet ist und zur Vernietung des Stanz- und Nietabschnittes 22 mit dem zweiten Bauteil 30 benutzt wird. Die genaue Ausbildung dieser Matrize 42 wird hier nicht beschrieben, da sie an sich gut bekannt ist durch den Bekanntheitsgrad der RSF-Elemente. Das entsprechende Verfahren ist im übrigen für das RSF-Mutterelement in der deutschen Patentschrift 36 10 675 ausführlich beschrieben.

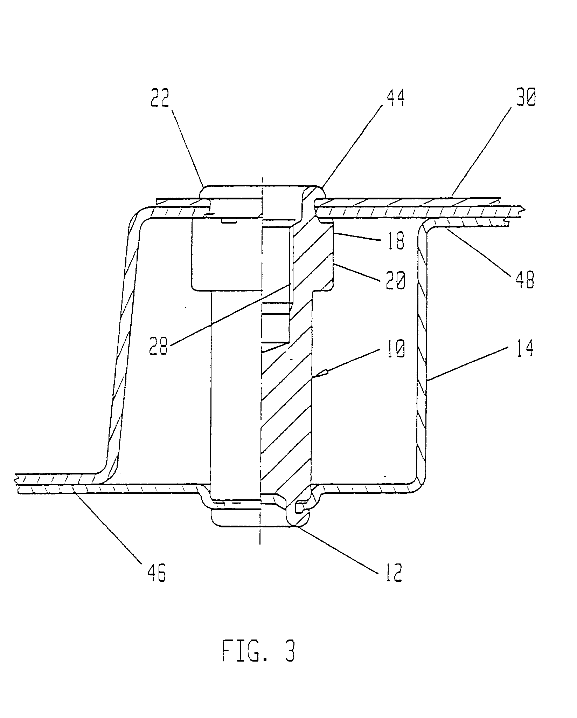

Nach der Vernietung des Stanz- und Nietabschnittes 22 mit dem zweiten Bauteil 30 sieht die Verbindung zwischen den zwei Bauteilen 14 und 30 und der dazwischen angeordneten Verbindungseinrichtung 10 so aus, wie in Fig. 3 dargestellt. Man sieht, daß der Stanz- und Nietabschnitt 22 zu einem umlaufenden Nietbördel 44 durch die Verpressung der Verbindung zwischen den beiden Matrizen 40 und 42 umgeformt wurde.

Man merkt auch, daß die zwei Bauteile 14 und 30 sich jetzt an zwei Stellen eng berühren, nämlich an den Stellen 46 und 48. Die so gebildete Struktur wird nunmehr durch die Durchführung von Schweißungen an den Stellen 46 und 48 fertiggestellt. Danach kann ein drittes Bauteil (nicht gezeigt) mittels eines Bolzens an das Zusammenbauteil gemäß Fig. 3 angeschraubt werden, wobei das Gewinde des Bolzens in den Gewindezylinder 28 der Verbindungseinrichtung 10 eingeschraubt wird.

Die Erfindung wird nachfolgend weiter erläutert anhand von weiteren Ausführungsbeispielen, wobei gleiche Teile mit den gleichen Bezugszeichen versehen werden und diese Teile im wesentlichen nur dann neu beschrieben werden, wenn Eigenschaften von Bedeutung sind, die sich von den Eigenschaften der entsprechenden Teile bei der Ausführungsform gemäß den Fig. 1, 2 und 3 vorliegen. Dies gilt für alle weiteren Ausführungsbeispiele.

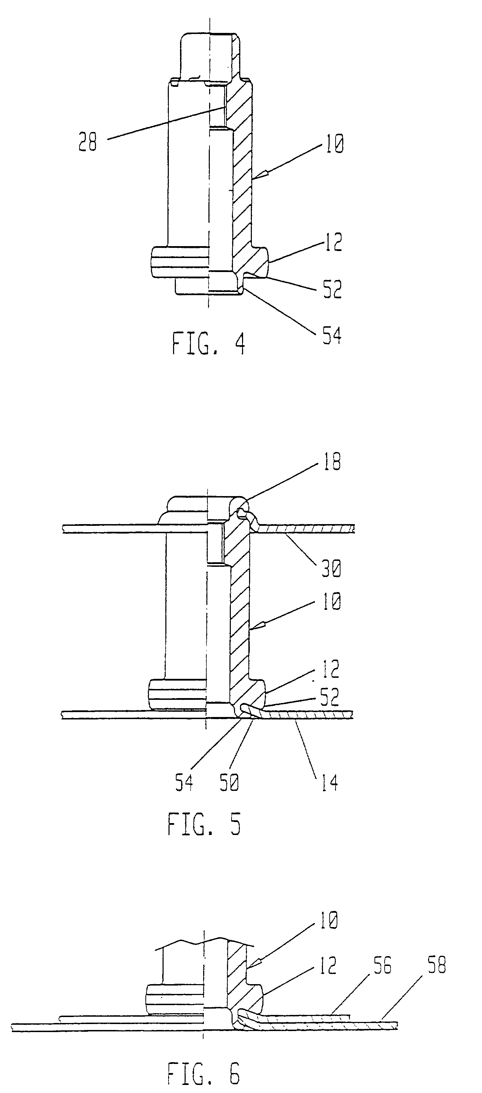

Fig. 4 zeigt eine teilweise in Längsrichtung geschnittene Ansicht einer weiteren Verbindungseinrichtung 10, dessen oberes Ende im Prinzip entsprechend dem unteren Ende der Verbindungseinrichtung 10 der Fig. 1 Ausführung ausgebildet ist, jedoch nur mit dem Unterschied, daß das obere Ende, wie die ganze Verbindungseinrichtung 10, hohl ist und einen Gewindezylinder 28 aufweist. Das untere Ende 12 der Verbindungseinrichtung der Fig. 4 ist in diesem Beispiel entsprechend einem RSN-Mutterelement der Firma Profil ausgebildet, d.h. entsprechend dem Mutterelement gemäß dem europäischen Patent 0 539 739, weshalb die genaue Ausbildung der entsprechenden Formmerkmale hier nicht näher beschrieben wird. Die Mutterelement-ähnliche Ausführung am unteren Ende 12 der Verbindungseinrichtung 10 der Fig. 4 ist mit einem etwas größeren Durchmesser ausgeführt, d.h. im wesentlichen entsprechend den sog. RND-Mutterelementen der Firma Profil.

Die Verbindung des unteren Endes 12 der Verbindungseinrichtung 10 mit dem ersten Bauteil 14 ist in Fig. 5 gezeigt. Man merkt, daß das entsprechende Blechformteil einen konusförmigen Kragen 50 aufweist, der zwischen dem Flansch 52 am unteren Ende der Verbindungseinrichtung 12 und den durch den Nietvorgang verformten Nietabschnitt 54 liegt, wobei dieser umgelegte Nietabschnitt entsprechend einem der Vorzüge des Klemmlochnietverfahrens bei dieser Ausführungsvariante plan mit der Unterseite des Bauteils 14 liegt, was besonders günstig ist beim Anschrauben von weiteren Bauteilen an die Unterseite des Bauteils 14.

Bei der Durchführung des Klemmlochnietverfahrens wird zunächst der konusförmige Kragen 50 etwas steiler gestellt und während des Fügeverfahrens flacher gepreßt, wodurch eine hochwertige Fügeverbindung entsteht. Die hier nicht gezeigten, jedoch vorhandenen Verdrehsicherungsnasen stellen sicher, daß eine Verdrehung der Verbindungseinrichtung 10 gegenüber dem Blechteil 14 bei der Einführung einer Schraube nicht vorkommt.

Fig. 5 zeigt aber auch die Verbindung zwischen dem oberen Ende 18 der Verbindungseinrichtung 10 der Fig. 4 mit dem zweiten Bauteil 30. Diese Verbindung gestaltet sich im wesentlichen identisch zur Ausbildung am unteren Ende 12 der Fig. 1, jedoch mit einer Ausnahme.

Bei der Durchführung des Klemmlochnietverfahrens im unteren Bereich der Verbindungseinrichtung 10 wird das Blechteil 14 vorgelocht. Nach der Durchführung dieser Verbindung, d.h. am ersten unteren Ende der Verbindungseinrichtung 10 wird dann das zweite Bauteil 30 über den noch nicht verformten Stanz- und Nietabschnitt 22 der Verbindungseinrichtung 10 der Fig. 4 gelegt und anschließend umgebördelt, wie in Fig. 5 gezeigt. Da das Bauteil 30 hier vorgelocht ist, entsteht kein Stanzbutzen im Gegensatz zu der Ausbildung im unteren Teil der Fig. 1. Es wäre jedoch durchaus möglich, die selbststanzende Funktion des Stanz- und Nietabschnittes 22 der Verbindungseinrichtung 10 der Fig. 4 auszunützen, wodurch dann ein Stanzbutzen entstünde, der das obere Ende 18 der Verbindungseinrichtung 10 gemäß Fig. 5 verschließen würde. Der Stanzbutzen kann jedoch, falls erwünscht, entfernt werden über einen Stößel, der durch die hohle Verbindungseinrichtung 10 hindurchgeführt wird.

Die Ausbildung sowohl der umformtechnisch ersten Verbindung im Bereich des ersten Bauteils 14 wie auch die umformtechnisch zweite Verbindung im Bereich des zweiten Bauteils 30 finden jeweils in einer Presse statt. Es werden die entsprechende Matrize und der entsprechende Preßstempel benutzt, die in den einschlägigen Patentanmeldungen zu den verschiedenen Verbindungsarten genau beschrieben sind, weshalb diese Teile hier nicht weiter beschrieben werden.

Fig. 6 zeigt lediglich, daß die Verbindungseinrichtung 10 auch an einem Bauteil im Bereich des unteren Endes 12 angebracht werden kann, das aus zwei Blechlagen 56 und 58 besteht. Auch die umformtechnische Verbindung im Bereich des oberen Endes 18 der Verbindungseinrichtung 10 kann - falls gewünscht - mit zwei oder mehr Blechlagen durchgeführt werden.

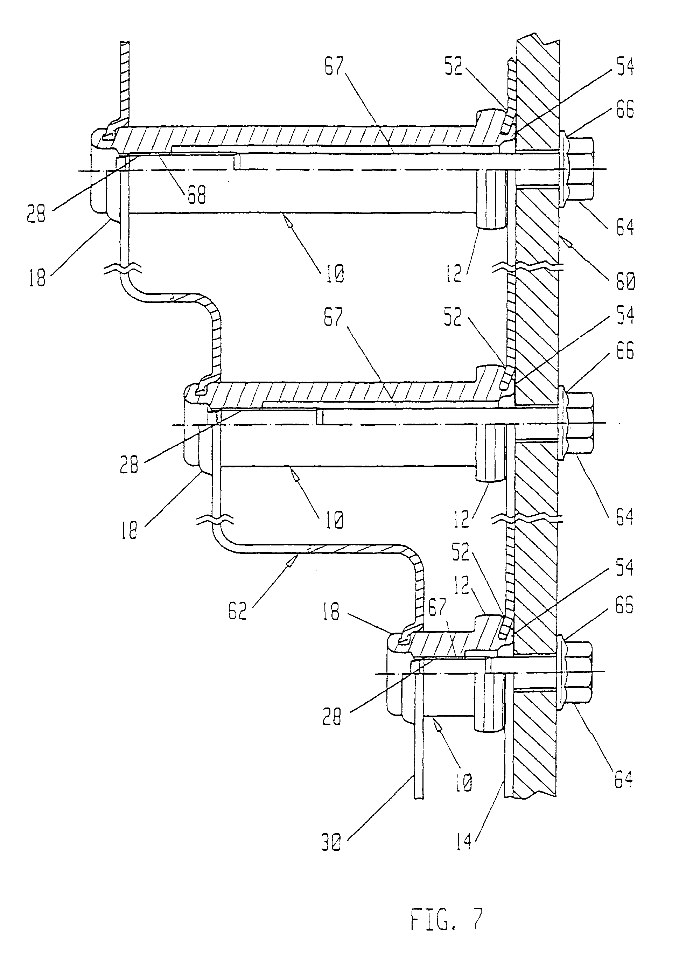

Fig. 7 zeigt nunmehr drei Verbindungseinrichtungen 10, die entsprechend der Verbindungseinrichtung 10 der Fig. 4 ausgebildet sind, jedoch drei verschiedene Längen aufweisen.

Zwecks der Darstellung sind alle drei Verbindungseinrichtungen 10 der Fig. 7 in unterschiedliche Bereiche der zwei Bauteile 14 und 30 im Abstand voneinander eingebracht, wodurch eine stufenförmige Ausbildung vorliegt. Diese Ausbildung ist zwar durchaus realisierbar, wurde jedoch mehr gewählt, um die unterschiedlichen Längen der unterschiedlichen Verbindungseinrichtungen 10 klarzustellen.

Man merkt, daß bei allen drei Verbindungseinrichtungen 10 der Fig. 7 die umformtechnischen Verbindungen mit dem jeweiligen Bauteil 14 bzw. 30 an den beiden Enden 12 und 18 genauso vorgenommen ist wie in Fig. 5 dargestellt.

Fig. 7 zeigt aber auch, wie ein drittes Bauteil 60 an das Zusammenbauteil 62 der Fig. 7 befestigt ist, und zwar hier über drei Schrauben 64, wobei das Kopfteil 66 jedes Bolzens 64 an das dritte Bauteil 60 anliegt und der Schaftteil 67 durch das dritte Bauteil 60 das erste Bauteil 14 und teilweise durch die Verbindungseinrichtung 10 erstreckt und das Gewinde 68 jedes Bolzens 64 in den Gewindezylinder 28 der jeweiligen Verbindungseinrichtung 10 eingeschraubt ist.

Dadurch, daß der Gewindezylinder 28 relativ weit entfernt ist vom ersten Bauteil 14, können bei allen drei Verbindungseinrichtungen 10 der Fig. 7 relativ lange Schrauben zum Einsatz kommen, die dann als Dehnschrauben ausgebildet werden können.

Die Verbindungseinrichtungen der Fig. 4, 5, 6 und 7 haben besondere Vorzüge für die vorgesehene Anwendung. Einerseits gewährleistet der Ringflansch 52, daß jede Verbindungseinrichtung 10 genau rechtwinklig zum ersten Bauteil 14 steht. Durch den vergleichsweise großen Durchmessers des Teils 52 ist auch die Verbindung im Bereich des ersten Bauteils ohne weiteres imstande, Scher- und Druckmomente jeweils statisch und dynamisch aufzunehmen. Die Verbindung im Bereich des verformten Nietabschnittes 54 dient einerseits der Ausdrucksicherung, andererseits der Verdrehsicherung der Verbindungseinrichtung 10 gegenüber dem ersten Bauteil 14.

Der Nietabschnitt 22 am zweiten Ende 18 der Verbindungseinrichtung 10 sichert beim Zusammenbau des zweiten Bauteils 30 mit den ersten Bauteil 14 eine qualitativ hochwertige Zentrierung und Positionierung des zweiten Bauteils 30 gegenüber dem ersten Bauteil 14. Die Drehsicherungsnasen im Schulterbereich um den Stanz- und Nietabschnitt 22 herum erhöhen die Verdrehsicherheit der Verbindung zwischen der Verbindungseinrichtungen und den beiden Bauteilen. Im übrigen ist auch die Verbindung im Bereich des Endes 18 imstande, Scherungs- und Druckkräfte aufzunehmen. Weiterhin ist sowohl bei der umformtechnischen Verbindung mit dem ersten Bauteil 14 wie auch bei der umformtechnischen Verbindung mit dem zweiten Bauteil 30 eine gute Abdichtung erzielt, die ohne weiteres flüssigkeitsdicht ausgeführt werden kann und bei genauen Toleranzeinheiten eine gasdichte Verbindung sicherstellt, wobei hier - wie auch bei jeder anderen, hier in dieser Anmeldung angesprochenen Verbindung - ein Abdichtkleber zusätzlich zur Anwendung gelangen kann, wenn eine absolute Gasdichtigkeit gefordert wird.

Es ist leicht zu verstehen, daß durch die Länge der Verbindungseinrichtung 10 und der sonstigen Verbindungen zwischen den beiden Bauteilen 14 und 30 eine dynamische Kippbewegung der Verbindungseinrichtung 10 gegenüber dem ersten Bauteil 14 ausgeschlossen werden können, so daß die Verbindung ohne weiteres imstande ist, dynamischen Beanspruchungen standzuhalten. Die Struktur weist auch eine hohe Steifigkeit auf, so daß sie besonders geeignet ist für die Anbringung von anderen hochbelasteten Bauteilen, beispielsweise das Bauteil 60.

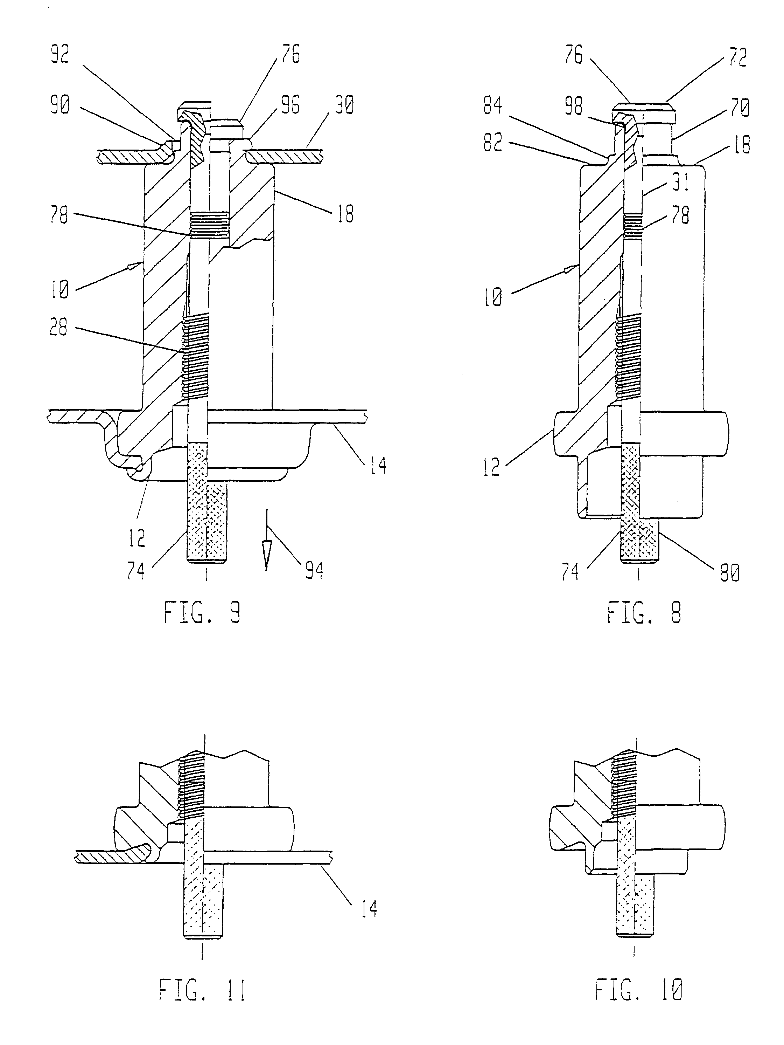

Fig. 8 zeigt eine weitere, erfindungsgemäße Ausführungsvariante der Verbindungseinrichtung 10, wobei das untere Ende 12 hier entsprechend dem oberen Ende 18 der Verbindungseinrichtung 10 der Fig. 1 ausgebildet ist, d.h. entsprechend dem RSF-Mutterelement der Firma Profil. Das in Fig. 8 gezeigte obere Ende 18 der einteiligen Verbindungseinrichtung 10 ist jedoch hier als Blindniethülse 70 ausgebildet. Die Verbindungseinrichtung 10 weist einen Anziehdorn 72 mit Schaftteil 74 und Kopfteil 76 sowie Sollbruchstelle 78 auf. Der untere Bereich des Schaftteils 74 ist hier mit einer Kreuzrändelung 80 versehen. Sinn dieser Ausbildung ist, die Formmerkmale zu erzeugen, die beim Angreifen einer Ziehzange Schlupf vermeiden. Diese Formmerkmale 80 können auch jede andere Formgebung aufweisen, die dem angegebenen Zweck dient.

Man merkt, daß die Niethülse 70 in eine sich radial zur Achsrichtung 31 der Verbindungseinrichtung 10 erstreckende erste Schulter 82 übergeht, wobei der Übergang über eine zweite Ringschulter 84 erfolgt, deren Durchmesser größer ist als der Außendurchmesser der Blindniethülse 70, jedoch kleiner als der Außendurchmesser der Ringschulter 82.

Die Verbindungseinrichtung 10 der Fig. 8 wird zunächst in einem ersten Blechteil 14 eingesetzt, wobei die Ausbildung im Bereich des unteren Endes 12 der Verbindungseinrichtung 10 in Fig. 9 der Ausbildung beim entsprechenden unteren Ende 12 der Verbindungseinrichtung 10 der Fig. 1 entspricht.

Das zweite Bauteil 30 wird auch hier vorgelocht und, wie auf der linken Seite der Fig. 9 gezeigt, mit einem konusförmigen Kragen 90 versehen, der sich in Richtung vom ersten Bauteil 14 weg erstreckt. Der konusförmige Kragen 90 begrenzt ein Loch 92 mit einem Durchmesser etwas größer als der Außendurchmesser der Ringschulter 84, jedoch kleiner als der Außendurchmesser der Ringschulter 82.

Beim Anziehen des Ziehdornes 74 in Pfeilrichtung 94 (bei gleichzeitigem Wegverschieben des Bauteiles 14 in der entgegengesetzten Richtung) verformt das Kopfteil 76 des Dornes die Blindniethülse 70 zu einem Ringbördel 96 und preßt den konusförmigen Ringkragen 90 wieder flach, so daß eine Ausbildung wie oben rechts in Fig. 9 gezeigt, entsteht. Sobald diese Lage erreicht ist, bricht der Schaftteil 74 des Dornes 72 an der Sollbruchstelle 78. Das in Fig. 9 gezeigte untere Ende des Schaftteils 74 kann dann entfernt werden. Man merkt, insbesondere aus Fig. 8, daß die Unterseite des Kopfes 76 des Dornes 72 im Bereich des Überganges zum Schaftteil 74 eine gerundete Hinterschneidung 98 aufweist. Bei der Verformung der Niethülse 70 wird auch Material der Niethülse in diese gerundete Hinterschneidung verdrängt. Dies führt dazu, daß der Kopfteil 76 des Dornes mit dem Schaftteil oberhalb der Sollbruchstelle kraft- und/oder formschlüssig in der Verbindungseinrichtung 10 festgehalten wird und nicht verlorengehen kann. Sollte man aus irgendeinem Grund die Entfernung des Kopfteils des Dornes wünschen, beispielsweise, um Zugang zu einem Innengewinde im oberen Bereich der Verbindungseinrichtung 10 der Fig. 9 zu schaffen (in Fig. 9 nicht gezeigt), so kann auf diese gerundete Hinterschneidung 98 verzichtet werden.

Man merkt, daß die Sollbruchstelle 78 in der Fig. 9 Ausführung oberhalb des Gewindezylinders 28 liegt, so daß der Rest des Ziehdornes die Einführung einer Schraube von unten in den Gewindezylinder 28 nicht verhindert.

Fig. 10 zeigt eine abgewandelte Ausbildung des unteren Endes 12 der Verbindungseinrichtung 10 der Fig. 8. Das untere Ende wird hier nämlich entsprechend dem unteren Ende 12 der Verbindungseinrichtung 10 der Fig. 4 und 5 ausgebildet, wobei die Fig. 10 die Ausbildung vor der Anbringung an dem ersten Bauteil 14, und die Fig. 11 die Lage nach der Anbringung am ersten Bauteil 14 zeigt.

Fig. 12 zeigt eine Ausbildung ähnlich der Fig. 9, jedoch von einer weiteren Abwandlung der Verbindungseinrichtung 10. Hier ist nämlich die Verbindung mit dem zweiten Bauteil 30 nicht am oberen Ende der Verbindungseinrichtung 10 erzeugt, sondern in einem vom ersten, unteren Ende beabstandeten Bereich 100, wobei nach dem Anziehen der Blindnietverbindung das obere Ende 18' der Verbindungseinrichtung 10 nunmehr von der dem ersten Bauteil 14 abgewandten Seite des zweiten Bauteils 30 wegsteht. Dies könnte beispielsweise dann von Nutzen sein, wenn das obere Ende 18' mit einem weiteren Gewindezylinder 102 ausgestattet wäre, so daß ein anderes Teil hier angeschraubt werden könnte. Beispielsweise könnte bei der Ausbildung der Fig. 12 das eine Ende eines Stoßdämpfers am Bauteil 14 unter Ausnutzung des Gewindezylinders 28 angeschraubt werden, während der Gewindezylinder 102 zur Befestigung einer Bremsleitung dient.

Fig. 13 zeigt eine weitere erfindungsgemäße Ausführungsform einer Verbindungseinrichtung 10, die im Bereich ihres unteren Endes 12 die bereits beschriebenen Formmerkmale des SBF-Elementes aufweist, jedoch hier - wie auch in der Fig. 4 Ausführung gezeigt ist - hohl ausgeführt ist mit einem Gewindezylinder 28.

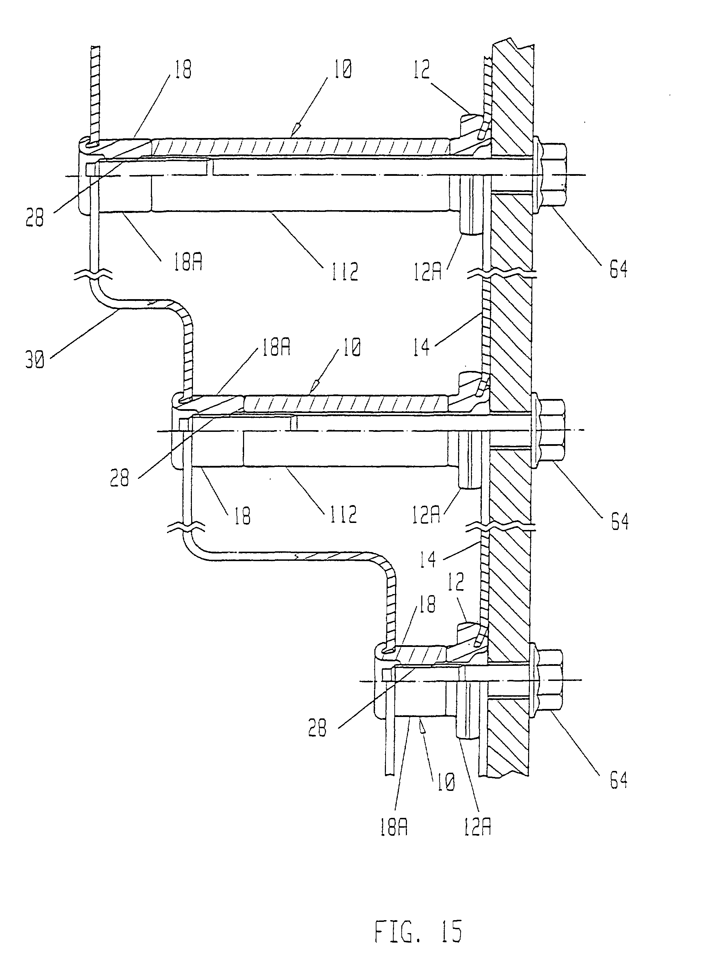

Fig. 14 zeigt eine mögliche Anbringung des unteren Endes 12 in einem napfartigen ersten Bauteil 14. Das obere Ende 18 der Verbindungseinrichtung 10 gemäß Fig. 14 wird dann mit einem zweiten Bauteil 30 verklebt. Die zwei Bauteile 14 und 30 werden anschließend aneinander an den Stellen 46 und 48 verschweißt. Ein drittes Bauteil 60 wird anschließend mittels eines Schraubbolzens 64 an dem aus den Bauteilen 14 und 30 bestehenden Zusammenbauteil angeschraubt, wobei das Gewindeteil des Schraubbolzens 64 in den Gewindezylinder 28 der Verbindungseinrichtung 10 eingeschraubt wird. Gegebenenfalls kann hier auf die Verklebung mit dem zweiten Bauteil 30 verzichtet werden.

Fig. 15 zeigt eine Ausbildung, die der Ausbildung gemäß Fig. 7 sehr ähnlich ist. Hier wird die Verbindungseinrichtung 10 dreiteilig ausgeführt. Es besteht am Ende 12 aus einem RND-Element 12A der Firma Profil, am Ende 18 aus einem RSF- oder SBF-Element 18A (im Falle des SBF-Elements als Mutter anstatt als Bolzenelement realisiert) und dazwischen einem Distanzrohr 112. Die Verbindung zwischen dem Distanzrohr 112 und dem Element 12A am unteren Ende 12 und dem Element 18A am oberen Ende 18 kann beispielsweise durch Schweißen erfolgen. Das Gewinde der Schraube 64 greift in den Gewindezylinder im Element 18A am Ende 18 der Verbindungseinrichtung 10 ein.

Fig. 15 zeigt, wie Verbindungseinrichtungen 10 verschiedene Längen durch die Anwendung von Distanzrohren verschiedener Längen erzeugt werden können, wobei bei der untersten Ausführungsform der Verbindungseinrichtung 10 überhaupt kein Distanzrohr zur Anwendung gelangt. Die Verbindung zwischen den beiden Elementen 12A, 18A und dem Distanzrohr 112 kann auch anders erfolgen. Beispielsweise könnten die Elemente und das Distanzrohr durch eine Verklebung aneinander befestigt werden. Dies ist in manchen Fällen durchaus sicher genug, da beim Anziehen der Schraube 64 alle Verbindungsfugen in Kompression belastet werden.

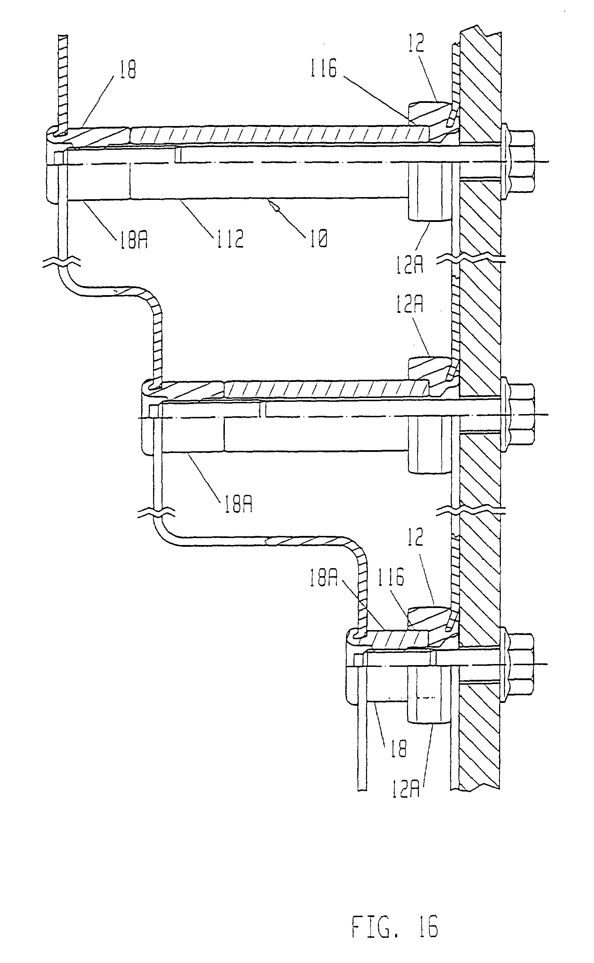

Die Ausbildung gemäß Fig. 16 ist ähnlich der der Fig. 15, nur wird hier das Distanzrohr 112 in eine zylinderförmige Vertiefung 116 des Elementes 12A am Ende 12 der Verbindungseinrichtung 10 eingepreßt (ggf. eingeklebt), wodurch eine sichere Verbindung zwischen dem Distanzrohr 112 und dem Element gewährleistet ist. Eine entsprechende Verbindung wäre schließlich auch bei dem Element am Ende 18 möglich. Es ist jedoch evtl. besser, hier auf ein Ineinandergreifen der beiden Teile zu verzichten, so daß eine leichtere Ausrichtung zwischen den beiden Elementen beim Einsetzen der Schraube möglich ist. Die Verbindung zwischen dem Element am Ende 18 und dem Distanzrohr 112 kann aber auch bei der Fig. 16 Ausführung geschweißt werden.

Bei der untersten Ausführungsform der erfindungsgemäßen Verbindungseinrichtung der Fig. 16 greift das eine Ende des Elements 18A am Ende 18 der Verbindungseinrichtung direkt in die zylinderförmige Vertiefung 116 des Elements 12A am Ende 12 ein.

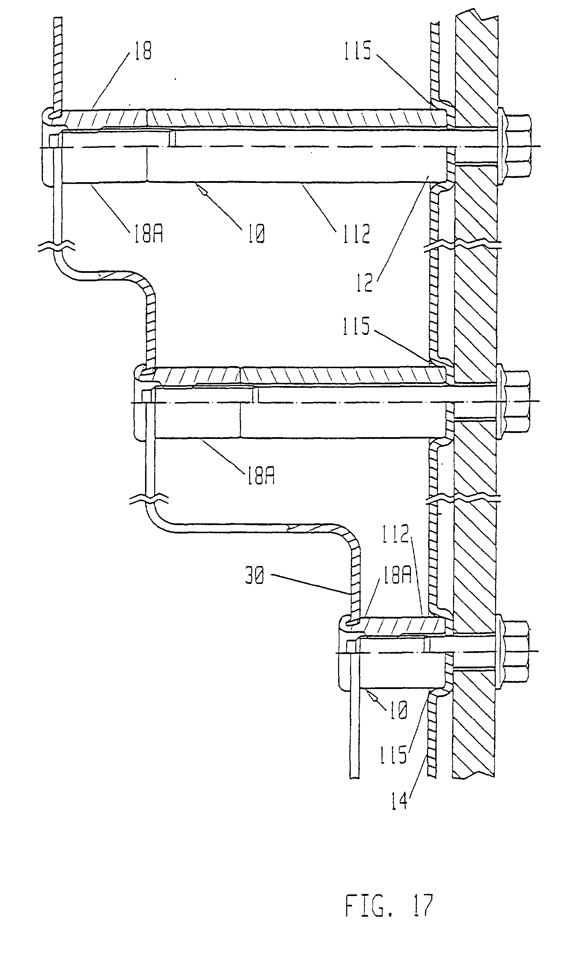

Bei der Fig. 17 ist die Verbindungseinrichtung zweiteilig ausgeführt, wobei das untere Ende der Verbindungseinrichtung 10 durch das Ende 12 des Distanzrohres 112 gebildet wird und diese in einer topfartigen Vertiefung 115 im ersten Bauteil 14 aufgenommen wird und dort eingepreßt, verklebt oder verschweißt sein kann. Die Verbindung zwischen dem Distanzrohr 112 und dem Element am anderen Ende 18 der Verbindungseinrichtung 10 erfolgt so, wie in Zusammenhang mit den Fig. 15 und 16 beschrieben. Bei der untersten Ausführungsform der Verbindungseinrichtung 10 der Fig. 17 ist das Distanzrohr 112 ein integraler Bestandteil des Elementes 18A, das mit dem Bauteil 30 umformtechnisch verbunden wird.

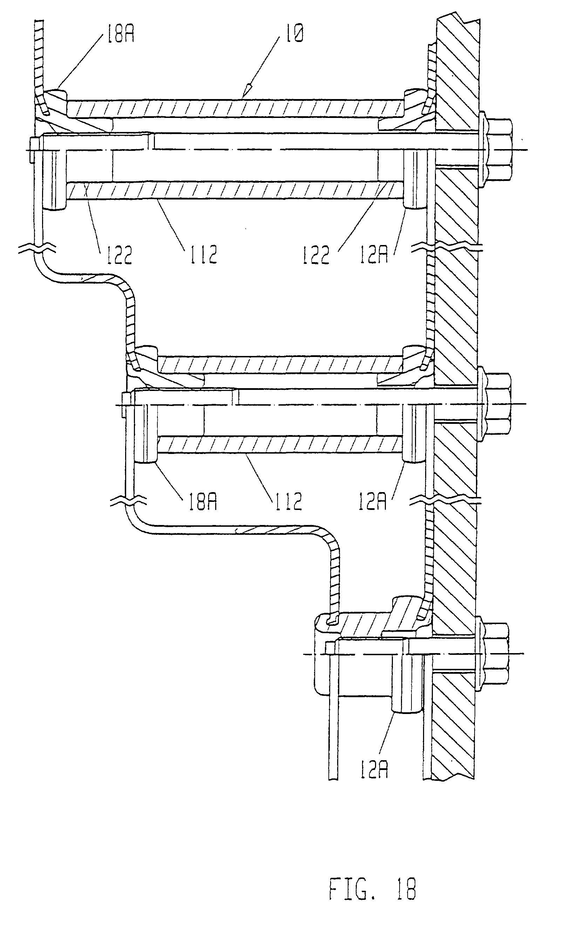

Bei der Fig. 18 liegt eine dreiteilige Ausführung der Verbindungseinrichtung 10 vor. Hier werden zwei gleiche Fügeelemente 12A, 18A in Form von RND-Mutterelementen der Firma Profil verwendet, wobei ein Distanzrohr 112 dazwischen angeordnet wird, um die dreiteilige Verbindungseinrichtung 10 herzustellen. Bei diesen Ausführungsformen weisen die Elemente 12A, 18A jeweils einen zylindrischen Teil 122 auf, der in einem jeweiligen Ende des Distanzrohres eingepreßt wird. Die Verbindungen zwischen den einzelnen Elementen 12A, 18A und dem Distanzrohr 112 können nach Belieben gewählt werden, d.h. beispielsweise mit Passung als Preßsitz, mit Verklebung, mit Schweißverbindung oder mit gequetschter Verbindung.

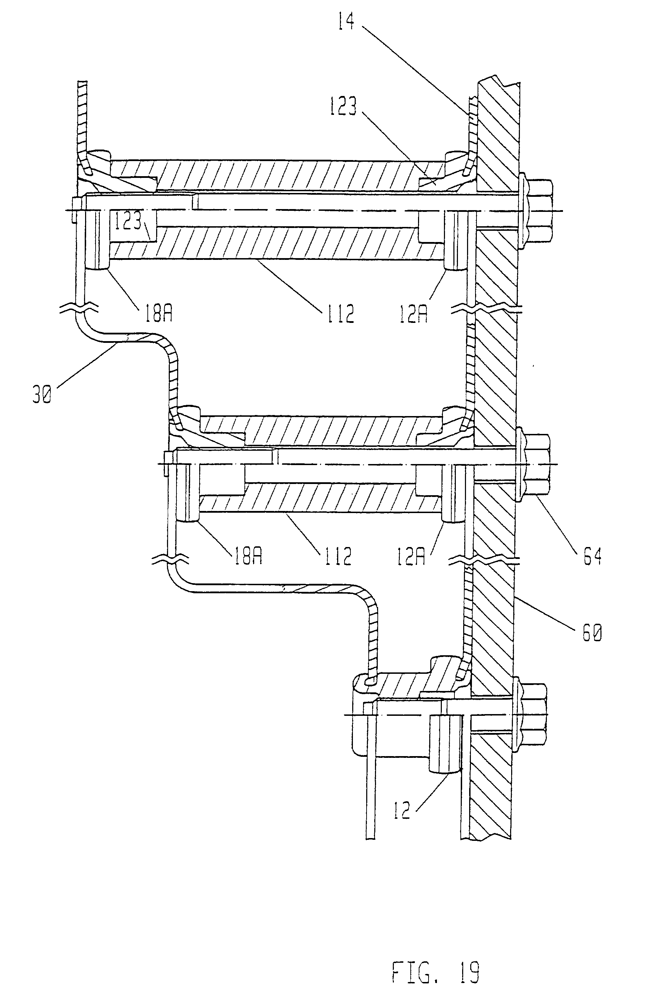

Fig. 19 zeigt eine ähnliche Ausführungsform wie Fig. 18, nur ist hier das Distanzrohr 112 mit zylindrischen Ausnehmungen 123 an seinen beiden Enden versehen, so daß es in der Mitte zwischen den beiden Elementen dickerwandig ausgeführt wird als bei dem Ausführungsbeispiel gemäß Fig. 18. Hierdurch wird die Stabilität noch weiter erhöht.

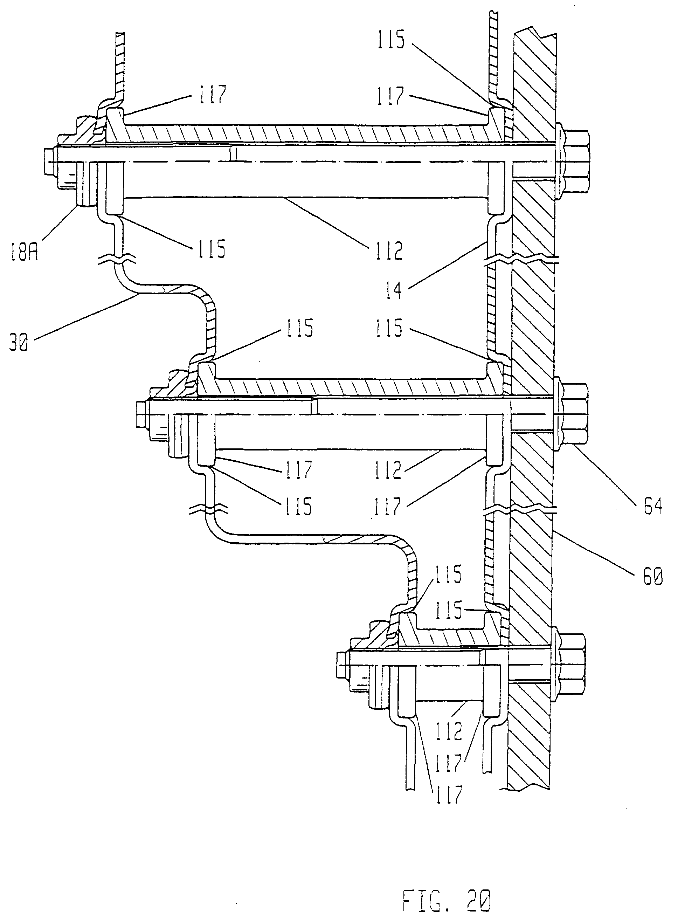

Die Ausführungsform gemäß Fig. 20 erfolgt unter Anwendung von Blechformteilen 14 und 30, die jeweils topfartige Vertiefungen 115 entsprechend der Fig. 17 aufweisen. Es findet auch hier eine mehrteilige Verbindungseinrichtung 10 Anwendung. Diese besteht aus einem Element 18A, das als RND-Element ausgebildet ist und formschlüssig mit dem zweiten Bauteil 30 verbunden ist. Das zweite Teil der Verbindungseinrichtung 10 besteht aus einem Distanzrohr 112 mit zylindrischen Ringflanschen 117 an seinen beiden Enden, die formgepaßt in den jeweiligen topfartigen Vertiefungen 115 sitzen. Die Verbindung zwischen den Enden des Distanzrohres 112 und den jeweiligen Vertiefungen kann nach Belieben erfolgen, beispielsweise als Passung, als Preßsitz, oder mittels einer Verklebung oder einer Verschweißung.

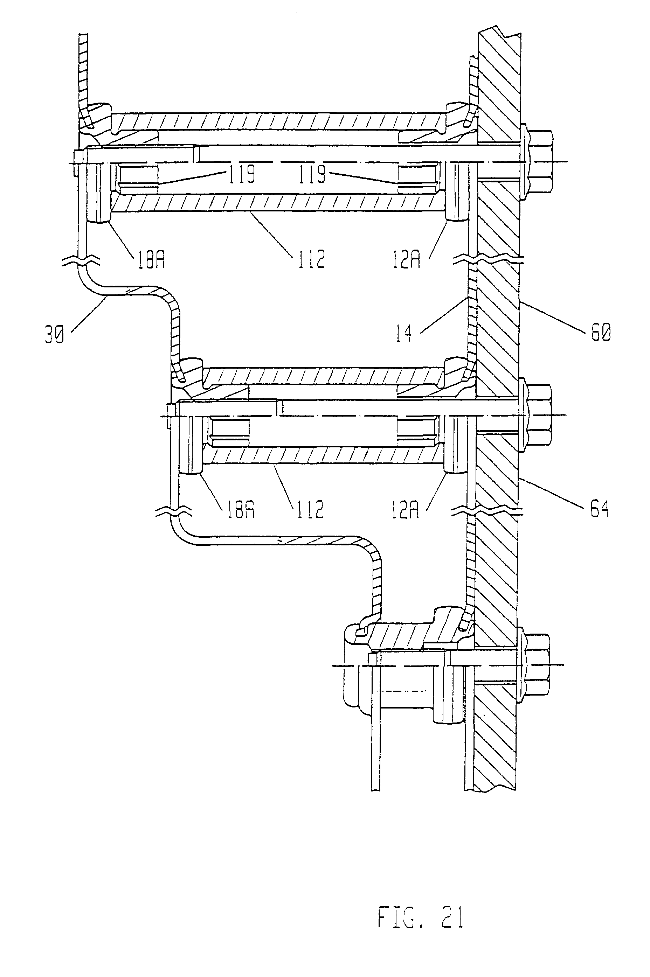

Fig. 21 zeigt dann ein Ausführungsbeispiel entsprechend der bisherigen Fig. 19, wobei jedoch die beiden Elemente in die jeweiligen Enden des Distanzrohres 112 eingepreßt werden und diese sich in axialer Richtung erstreckende Rippen bzw. Nuten 119 aufweist, die der Verdrehsicherung dienen. Auch kann eine radiale Quetschverbindung zwischen den Elementen und dem Distanzrohr erfolgen.

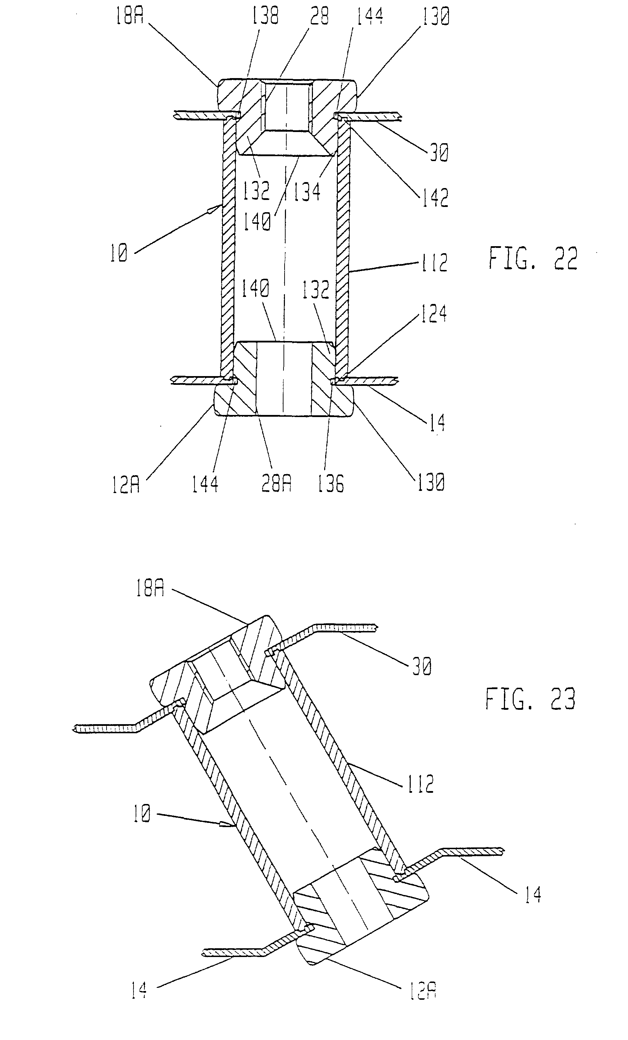

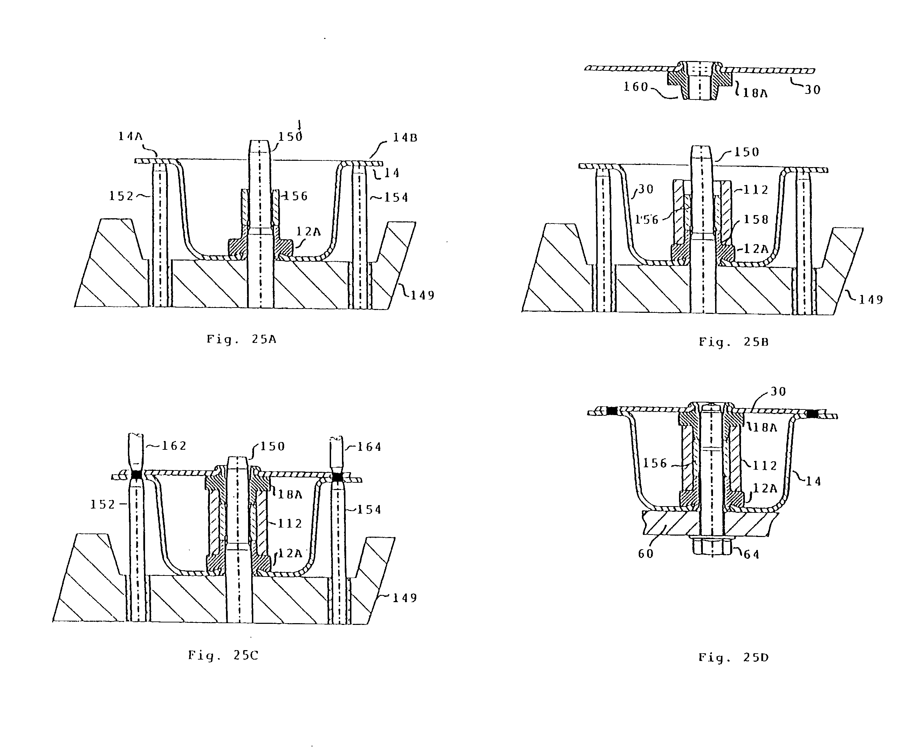

Fig. 22 zeigt wieder eine alternative, dreiteilige Ausbildung einer Verbindungseinrichtung, hier unter Anwendung zweier kreisrunden Elemente 12A, 18A, die jeweils einen Flansch 130 mit einem ersten Durchmesser und einem zylindrischen Teil 132 mit einem kleineren Durchmesser als der Flansch 130 aufweisen. Der zylindrische Teil 132, der an seinem, dem Flansch 130 abgewandten Stirnende einer Fase 134 aufweist, wird durch ein entsprechendes Loch 136 bzw. 138 im Bauteil 14 bzw. 30 eingesetzt. Die Anordnung ist so getroffen, daß die beiden Flansche 130 der beiden Elemente auf entgegengesetzten Seiten des ersten und des zweiten Bauteils 14 und 30 liegen, die Stirnenden 140 der beiden Elemente sind einander zugewandt. Das Stirnende 140 des Elements 18A ist mit einer konusförmigen Vertiefung 141 versehen, welche als Einführhilfe für die Spitze eines Bolzens gedacht ist. Diese Art von Einführhilfe ist insbesondere dann von Bedeutung, wenn der Innendurchmesser des Distanzrohrs 112 deutlich größer ist als der Außendurchmesser des Bolzens, da ein solcher Unterschied im Durchmesser die Gefahr des Verkantens des Bolzens in sich birgt, der durch eine solche Einführhilfe ggf. mit einer entsprechenden Ausbildung des freien Endes des Bolzens, beispielsweise mit einer konusförmigen Spitze, überwunden werden kann. Eine weitere Möglichkeit, diese Gefahr des Verkantens zu überwinden, die die Einführung des Bolzens erschwert oder gar verhindert und ggf. sogar zur Beschädigung des Gewindes führen könnte, wird im Zusammenhang mit den Fig. 25A bis D später erläutert. Sowohl die konusförmige Einführhilfe wie auch die entsprechende Zentrierhülse gemäß den Fig. 25A bis D kann bei allen anderen Ausführungsbeispielen der Erfindung angewandt werden, wo die Gefahr des Verkantens existiert.

Zwischen den zwei Bauteilen 14, 30 befindet sich ein Distanzrohr 112 mit einer umlaufende Ringnase 142 an seinen beiden Stirnenden. Das obere Element weist einen Gewindezylinder 28 auf, das untere Element eine zylindrische Bohrung 28A, dessen Durchmesser etwas größer ist als der Außendurchmesser des Gewindezylinders 28. Die Anordnung wird durch Pressung zusammengepreßt. Während dieser Pressung verdrängen die Ringnasen 142 Material der beiden Bauteile 14, 30 so daß das verdrängte Material in jeweilige Ringnuten 144 der Elemente 12A, 18A eingeformt wird, wodurch eine formschlüssige Verbindung zwischen den beiden Bauteilen 14 und 30 und dem jeweiligen Element 12A und 18A entsteht. Die Fasen 134 erleichtern das Einschlüpfen der jeweiligen Elemente in das Distanzrohr 112. Der zylindrische Bereich 132 hat einen Durchmesser, der geringfügig größer ist als der Innendurchmesser des Distanzrohres 112, so daß hier ein Preßsitz entsteht.

Bei der Anbringung eines dritten Bauteils 60 an dem ersten Bauteil 14 wird ein Schraubenelement 64 durch die Durchgangsbohrung 28A des ersten Elementes 12A eingeführt und mit dem Gewindezylinder 28 des zweiten Elementes 18A verschraubt. Die Verschraubung sorgt für eine zusätzliche Sicherung der Verbindung der drei Elemente zu einer Verbindungseinrichtung 10.

Fig. 23 zeigt im Prinzip die gleiche Anordnung wie Fig. 22, jedoch zeigt sie, daß die Verbindungseinrichtung hier in abgewinkelte Bereiche der jeweiligen Blechteile 14 bzw. 30 eingebracht werden kann.

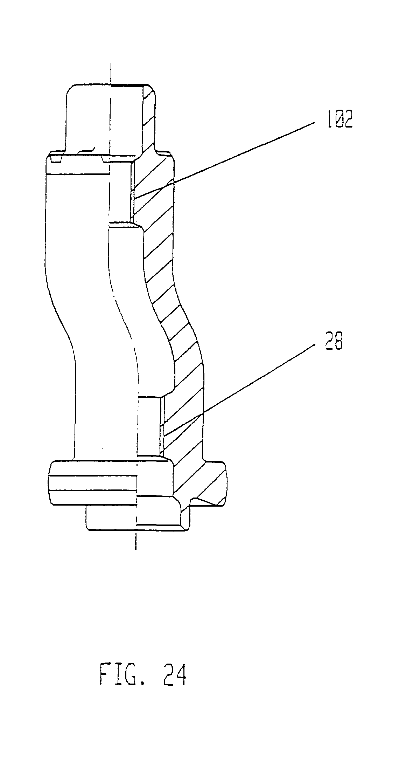

Fig. 24 zeigt eine einteilige Verbindungseinrichtung 10 ähnlich der Fig. 4, wobei jedoch die beiden Enden der Verbindungseinrichtung gegeneinander versetzt sind. Eine derartige Ausführung kann manchmal bei gesonderten Einbaufällen Hilfe leisten, wenn besondere Platzbeschränkungen bestehen. Es ist auch möglich, die Verbindungseinrichtung der Fig. 24 mit zwei Gewindezylindern 28, 102 auszustatten, wobei beispielsweise der Gewindezylinder 28 am unteren Ende der Verbindungseinrichtung in Fig. 24 für die Anbringung eines dritten Bauteils 60 dient, während der Gewindezylinder 102 am oberen Ende der Verbindungseinrichtung für die Anbringung eines Zusatzteils beispielsweise einer Bremsleitungbefestigung ausgenutzt werden kann.

Die Zeichnungen der Fig. 25A bis D zeigen schließlich ein mögliches Verfahren zur Herstellung einer erfindungsgemäßen Verbindung.

Fig. 25A zeigt zunächst ein erstes Blechteil 14 in einem Werkzeug 149 mit einem Zentrierdorn 150. Das Blechteil 14 weist eine im Querschnitt U-förmige Vertiefung auf, in deren Bodenbereich ein erstes hohles Element entsprechend dem mittleren Element 12A der Fig. 18 umformtechnisch befestigt ist. Das Gebilde bestehend aus dem Blechteil 14 mit dem Elemente 12A ist über den Zentrierdorn 150 gelegt. Die zwei seitlichen, horizontalen Bereiche 14A und 14B sitzen auf jeweiligen Schweißelektroden 152 bzw. 154. Auf dem Zentrierdorn oberhalb des Elementes 12A befindet sich eine lose Zentrierhülse 156, welche beispielsweise aus Kunststoff besteht und zur Gewichtsersparnis gegebenenfalls geschlitzt werden kann.

Fig. 25B zeigt das Gebilde von Fig. 25A, wobei jedoch das Distanzrohr 112 nunmehr über die Zentrierhülse gelegt ist und ggf. auf den zylindrischen Vorsprung 158 des Elementes 12A gepreßt werden kann, sofern ein Preßsitz vorgesehen ist. Alternativ hierzu könnte beispielsweise eine Klebeverbindung oder eine mit Spiel behaftete Verbindung vorliegen. Das Distanzrohr 112 könnte aber auch vor Anbringung des Elementes 12A mit diesem durch eine der oben erwähnten Methoden verbunden werden, oder mit diesem verschweißt werden, oder mit diesem einstückig ausgebildet sein.

Oberhalb des Blechteils 14 befindet sich ein zweites Blechteil 30, das mit einem Mutterelement 18A entsprechend der Fig. 18 versehen ist, wobei das Element 18A mit dem Blechteil 30 bereits vernietet ist. Das Zusammenbauteil bestehend aus dem Mutterelement 18A und dem Blechteil 30 wird nun unter Anwendung des Zentrierdorns 150 entsprechend Fig. 25C zentriert über das Blechteil 14 und Element 12A mit Distanzrohr 112 gelegt. Der zylindrische Vorsprung 160 des Mutterelementes 18A wird ggf. in das freie Ende des Distanzrohres gepreßt oder geklebt oder mit Spiel eingelassen. Die zwei Blechteile werden mittels zweier weiterer Schweißelektroden 162, 164 verschweißt.

Fig. 25D zeigt dann die fertige Konstruktion nach Entfernung aus dem Werkzeug 149 und nach Anbringung eines Bauteils 60 mittels eines Bolzens 64. Die Zentrierhülse 156 verhindert das Verkanten des Bolzens 64 bei dessen Einsetzen. Anstatt des Elementes 18A erst mit dem Blechteil 30 zu vernieten, könnte das Element 18A erst mit dem Distanzrohr verbunden und dann mit dem Blechteil vernietet werden. Die Verbindungseinrichtung bestehend aus dem Element 12A, dem Distanzrohr 112, der Zentrierhülse 156 und dem Element 18A könnte auch als Einheit vorgefertigt werden, dann mit dem Blechteil 18 oder 30 vernietet und anschließend mit dem jeweils anderen Blechteil 30 bzw. 18 vernietet werden, und zwar vor oder nach dessen Schweißverbindung mit dem Blechteil 18 oder 30.

Die Bauteile sind vorzugsweise Blechteile, können aber auch Strangpreßteile sein oder aus anderen Materialien bestehen, beispielsweise aus Kunststoff.

## Patentansprüche

1. Verbindungseinrichtung (10), welche an ihrem einen Ende (12) über eine umformtechnisch herstellbare Verbindung (11), vorzugsweise eine Nietverbindung, an einem ersten Bauteil (14) befestigbar ist und einen Aufnahmebereich (28) aufweist, der zur Aufnahme eines Bolzens (64), einer Mutter oder eines anderen Elements, beispielsweise ein Bajonettteil oder eine Welle, ausgelegt ist, **dadurch gekennzeichnet, daß** die Verbindungseinrichtung in einem dem erstgenannten Ende (12) beabstandeten Bereich (18) zur reibschlüssigen oder umformtechnischen Anbringung an oder in ein zweites Bauteil (30) ausgelegt ist, wobei nach Fertigstellung einer Verbindung mit dem ersten Bauteil (14) und Anbringung des zweiten Bauteils (30) der Aufnahmebereich (28) die Anbringung eines weiteren Bauteils (60) ermöglicht.

2. Verbindungseinrichtung (10) nach Anspruch 1, **dadurch gekennzeichnet, daß** der beabstandete Bereich am dem erstgenannten Ende (12) entgegengesetzten Ende (18) der Verbindungseinrichtung vorgesehen ist.

3. Verbindungseinrichtung (10) nach Anspruch 1 oder 2, **dadurch gekennzeichnet, daß** der beabstandete Bereich (18) als Blindniethülse (70) ausgelegt ist.

4. Verbindungseinrichtung (10) nach einem der vorhergehenden Ansprüche, **dadurch gekennzeichnet, daß** der beabstandete Bereich (18) für die umformtechnische Anbringung an ein zweites Bauteil (30) oder an einen weiteren Bereich des erstgenannten Bauteils (14) ausgelegt ist.

5. Verbindungseinrichtung (10) nach einem der vorhergehenden Ansprüche, **dadurch gekennzeichnet, daß** sie einteilig ausgeführt ist.

6. Verbindungseinrichtung (10) nach einem der vorhergehenden Ansprüche 1 bis 4, **dadurch gekennzeichnet, daß** sie mehrteilig (12A, 18A; 12A, 112, 18A) ausgeführt ist.

7. Verbindungseinrichtung (10) nach Anspruch 6, **dadurch gekennzeichnet, daß** sie aus einem ersten Verbindungselement (12A) besteht das im Kopfbereich an das erstgenannte Bauteil (14) befestigbar ist und in oder auf ein stabförmiges Teil (112) führt und ggf. mit diesem verklebt, verschweißt oder über eine Quetschverbindung oder über eine andere Verbindung befestigt ist, wobei das stabförmige Teil (112) an seinem dem Kopfteil des Verbindungselementes (12A) entgegengesetzten Ende entweder an das zweite Bauteil (30) unmittelbar oder über ein weiteres Verbindungselement anbringbar ist, wobei im letzteren Fall das stabförmige Teil ggf. mit dem weiteren Verbindungselement (18A) verklebt, verschweißt oder vorzugsweise über eine form- und/oder kraftschlüssige Verbindung, beispielsweise eine Quetschverbindung, befestigt ist, wobei vorzugsweise eines (18A) der beiden Verbindungselemente (12A, 18A) ein Gewindeteil (28)(Innen- oder Außengewinde) und das andere (12A) eine Durchgangsbohrung aufweist.

8. Verbindungseinrichtung (10) nach einem der vorhergehenden Ansprüche, **dadurch gekennzeichnet, daß** sie bzw. ein etwaiges stabförmiges Teil (112) als Distanzrohr ausgebildet ist.

9. Verbindungseinrichtung (10) nach Anspruch 8, **dadurch gekennzeichnet, daß** das Distanzrohr mit einem Innengewinde ausgestattet ist das vorzugsweise benachbart zu einem der Enden der Verbindungseinrichtung angeordnet ist.

10. Verbindungseinrichtung (10) nach einem der vorhergehenden Ansprüche, **dadurch gekennzeichnet**, das die beiden Enden der Verbindungseinrichtung gegeneinander versetzt angeordnet sind (Fig. 24), bspw. durch die Anwendung eines gekröpften stabförmigen Teils oder Distanzrohres.

11. Verbindungseinrichtung (10) nach einem der vorhergehenden Ansprüche, **dadurch gekennzeichnet, daß** sie ein Innengewinde (28) oder Außengewinde zur Anbringung eines dritten Bauteils (60) mittels eines Bolzens (64) bzw. einer Mutter aufweist.

12. Verbindungseinrichtung (10) nach einem der vorhergehenden Ansprüche, **dadurch gekennzeichnet, daß** die umformtechnisch herstellbare Verbindung (11) zur Anwendung mit einem vorgelochten Bauteil (14; 30) ausgelegt ist, beispielsweise unter Anwendung einer Verbindungseinrichtung mit Nietmerkmalen nach Art der RND-, RSN-, RSF-, RSK-, RSU-, HI- oder UM-Mutterelemente oder unter Anwendung einer Verbindungseinrichtung mit Formmerkmalen nach Art der EBF-, SBK- oder SBF-Bolzenelemente der Firma Profil Verbindungstechnik GmbH & Co. KG.

13. Verbindungseinrichtung (10) nach einem der vorhergehenden Ansprüche 1 bis 11, **dadurch gekennzeichnet, daß** die umformtechnisch herstellbare Verbindung (11) zur Anwendung mit einem nicht-vorgelochten Bauteil (14, 30) ausgelegt ist, beispielsweise unter Anwendung einer Verbindungseinrichtung mit integriertem Vorlochen unter Anwendung einer Verbindungseinrichtung mit Formmerkmalen nach Art der RSK- oder RSU-Mutterelemente der Firma Profil Verbindungstechnik GmbH & Co. KG oder unter Anwendung einer Verbindungseinrichtung mit selbststanzenden Merkmalen, beispielsweise nach Art der UM-, HI-, RSF-Mutterelemente, oder EBF-(in selbststanzender Ausführung) oder SBK- oder SBF-Bolzenelementen der Firma Profil Verbindungstechnik GmbH & Co. KG.

14. Verbindungseinrichtung (10) nach einem der vorhergehenden Ansprüche, **dadurch gekennzeichnet, daß** das erste Bauteil (14) und/oder das zweite Bauteil (30) mit topfartigen Vertiefungen (115) im Bereich der Anbringungsstelle der Verbindungseinrichtung (10) versehen sind.

15. Verbindungseinrichtung (10) nach Anspruch 6 und einem oder mehreren der weiteren, vorhergehenden Ansprüche, **dadurch gekennzeichnet, daß** ein Mutterelement (12A) mit Niet- oder Stanzund Nietmerkmalen (22) zur Herstellung der umformtechnischen Verbindung (11) zum ersten Bauteil (14) zur Anwendung gelangt und das Mutterelement entweder wie üblich ein Gewinde (28) aufweist oder anstatt eines Gewindes mit einer Durchgangsbohrung versehen ist.

16. Verbindungseinrichtung nach Anspruch 6 und einem oder mehreren der vorhergehenden Ansprüche, **dadurch gekennzeichnet, daß** bei Anwendung eines Bolzenelementes zur Herstellung der umformtechnischen Verbindung zum ersten Bauteil der Schaftteil des Bolzenelements entweder hohl ausgeführt ist oder eine massive Ausführung aufweist und mit getrenntem Distanzrohr und ggf. Mutter auf der dem zweiten Bauteil zugewandten Seite des ersten Bauteils ergänzt wird, wobei bei Anwendung eines Bolzenelements mit hohlem Schaftteil das Außengewinde des Schaftteils in ein Innengewinde des Distanzrohres einschraubbar sein kann und die Anbringung des dritten Bauteils über eine durch das erste Bauteil, das hohle Schaftteil und das Distanzrohr durchgeführte Schraube erfolgt, die entweder in ein Gewinde im Distanzrohr an dessen, dem ersten Bauteil abgewandten Ende, oder in ein Gewinde in einem am ersten Bauteil abgewandten Ende des Distanzrohres angebrachten und umformtechnisch mit dem zweiten Bauteil verbundenen Element oder in eine Mutter an der dem ersten Bauteil abgewandten Seite des zweiten Bauteils einschraubbar ist und bei Anwendung eines Bolzenelementes mit massivem Schaftteil diese entweder in ein Innengewinde mit Distanzrohr einschraubbar ist, wobei die Anbringung eines dritten Bauteiles dann auf der dem ersten Bauteil abgewandten Seite des zweiten Bauteils über eine Schraube erfolgt, die in ein Innengewinde im Distanzrohr eingreift, oder durch das Distanzrohr und das zweite Bauteil hindurchragt und dort zur Anbringung eines dritten Bauteils mit einer getrennten, auf der dem ersten Bauteil abgewandten Seite des zweiten Bauteils angeordneten Mutter zusammenarbeitet.

17. Verbindungseinrichtung nach Anspruch 8, **dadurch gekennzeichnet, daß** das Distanzrohr (112) an seinem Stirnende bzw. an beiden Stirnenden mit einer Nase oder mit mehreren Nasen versehen ist, die zum eingreifen in eine oder mehrere entsprechende Vertiefungen bei bei der dem Distanzrohr zugeordneten Verbindungsstelle am ersten und/oder zweiten Bauteil (14, 30) ausgelegt sind.

18. Verbindungseinrichtung (10) nach Anspruch 3, **dadurch gekennzeichnet, daß** die Verbindungseinrichtung (10) mit einem Dorn (72) mit Sollbruchstelle (78) ausgestattet ist, dessen Kopf (76) bei Ausübung von Ziehkräften auf das Schaftteil (74) des Dorns (72) zur Verformung der Blindniethülse (70) ausgelegt ist, wobei der Kopfteil (76) des Dorns entweder zur Entfernung aus dem Bereich der Verbindungseinrichtung (10) nach Verformung der Blindniethülse (70) oder durch das Vorsehen von Formmerkmalen, wie beispielsweise eine Hinterschneidung im Schaftteil benachbart zum Kopf zum form- und/oder kraftschlüssigen Verbleib mit der Verbindungseinrichtung (10) ausgelegt ist.

19. Verbindungseinrichtung (10) nach Anspruch 3 und 18, **dadurch gekennzeichnet, daß** die Blindniethülse (70) in eine im Bereich der dem ersten Bauteil (14) zugewandten Seite des zweiten Bauteils (30) angeordnete Schulter (82) übergeht.

20. Verbindungseinrichtung (10) nach Anspruch 19, **dadurch gekennzeichnet, daß** eine zweite Schulter (84) zwischen der Blindniethülse (70) und der ersten Schulter (80) angeordnet ist und einen Durchmesser aufweist, der größer als der Außendurchmesser der Blindniethülse (70), jedoch kleiner als der Außendurchmesser der ersten Schulter (82) ist und eine Höhe aufweist, die vorzugsweise zumindest in etwa die Dicke des zweiten Bauteils (30) im Bereich der Niethülse entspricht.

21. Verbindungseinrichtung (10) nach Anspruch 19 oder 20, **dadurch gekennzeichnet, daß** sie zur Anwendung mit einem vorgelochten zweiten Bauteil ausgelegt (30) ist, dessen Lochung mit einer zumindest im wesentlichen konusförmigen, auf der vom ersten Bauteil (14) abgewandten Seite des zweiten Bauteils (30) vorstehenden Kragens (90) versehen ist und die Blindniethülse (70) und der Dorn (72) der Verbindungseinrichtung ausgelegt sind, um beim Anziehen des Dorns (72) den Kragen (90) über die Blindniethülse (70) zumindest im wesentlichen flach zu pressen entsprechend dem Vorgehen bei der Durchführung des sogenannten Klemmlochnietverfahrens (EP 0 539 793) ausgelegt ist.

22. Verbindungseinrichtung (10) nach einem der Ansprüche 3 und 18 bis 21, **dadurch gekennzeichnet, daß** in der Verbindungseinrichtung zwischen der Niethülse (70) und dem ersten Bauteil (14) ein Gewinde (28) zur Aufnahme einer von der der Niethülse abgewandten Seite des ersten Bauteils eingeführte Schraube vorgesehen ist und vorzugsweise einen Kerndurchmesser aufweist, der etwas größer ist als der Außendurchmesser des Schaftteils (74) des Dorns (72).

23. Verbindungseinrichtung (10) nach einem der Ansprüche 3 und 18 bis 22, **dadurch gekennzeichnet, daß** das Schaftteil (74) des Dorns (72) mit Formmerkmalen versehen ist, um ein sicheres Angreifen von einem Ziehwerkzeug zu ermöglichen.

24. Verbindungseinrichtung (10) nach einem oder mehreren der vorhergehenden Ansprüche, **dadurch gekennzeichnet, daß** die urnformfähigen Enden (12, 18) der Verbindungseinrichtung (10) zur Erzeugung einer mediendichten Verbindung mit dem ersten und/oder zweiten Bauteil (14, 30) ausgelegt sind, wobei ggf. wärmestabile Kleber zur Sicherstellung gasdichter Verbindungen zur Anwendung bei dem Einsetzen der Verbindungseinrichtung gelangen können.

25. Verbindungseinrichtung (10) nach einem der vorhergehenden Ansprüche 1 bis 24, welche ein Innengewinde (28) zur Aufnahme eines Bolzens (64) und einen rohrförmigen Bereich (112) aufweist, wobei der Innendurchmesser des rohrförmigen Bereiches größer ist als der Außendurchmesser des Bolzens (64), **dadurch gekennzeichnet, daß** im rohrförmigen Bereich eine konusförmige Einführhilfe vor dem Gewinde oder eine Zentrierhülse vorgesehen ist.

26. Kombination einer Verbindungseinrichtung (10) nach einem der vorhergehenden Ansprüche mit einem Bauteil (14) bzw. mit zwei oder drei Bauteilen (14, 30; 14, 30, 60), **dadurch gekennzeichnet, daß** die umformtechnisch herstellbare Verbindung (11) zur Anwendung mit einem vorgelochten Bauteil (14) ausgelegt ist, beispielsweise unter Anwendung einer Verbindungseinrichtung mit Nietmerkmalen nach Art der RND-, RSN-, RSF-, RSK-, RSU, HI- oder UM-Mutterelemente oder unter Anwendung einer Verbindungseinrichtung mit Formmerkmalen nach Art der EBF-, SBK- oder SBF-Bolzenelemente der Firma Profil Verbindungstechnik GmbH & Co. KG.

27. Kombination nach Anspruch 26, **dadurch gekennzeichnet, daß** die umformtechnisch herstellbare Verbindung (11) zur Anwendung mit einem nicht-vorgelochten (14) Bauteil ausgelegt ist, beispielsweise unter Anwendung einer Verbindungseinrichtung (10) mit integriertem Vorlochen unter Anwendung einer Verbindungseinrichtung mit Formmerkmalen nach Art der RSK- oder RSU-Mutterelemente der Firma Profil Verbindungstechnik GmbH & Co. KG oder unter Anwendung einer Verbindungseinrichtung mit selbststanzenden Merkmalen, beispielsweise nach Art der UM-, HI-, RSF-Mutterelemente, oder EBF-(in selbststanzender Ausführung) oder SBK- oder SBF-Bolzenelementen der Firma Profil Verbindungstechnik GmbH & Co. KG.

28. Kombination nach Anspruch 26 oder 27, **gekennzeichnet durch** einen Bolzen (64), dessen Kopfteil auf der dem zweiten Bauteil (30) abgewandten Seite des ersten Bauteils (14) angeordnet ist und dessen Schaftteil sich **durch** das erste Bauteil und in die Verbindungseinrichtung (10) erstreckt und in einem Gewinde (28) eingeschraubt ist, daß sich entweder zwischen dem ersten und zweiten Bauteil in der Verbindungseinrichtung (10) oder auf der dem ersten Bauteil (14) abgewandten Seite des zweiten Bauteils (30) befindet.

29. Kombination nach Anspruch 26 oder 27, **dadurch gekennzeichnet, daß** die Verbindungseinrichtung einen Schaftteil aufweist, der durch das zweite Bauteil hindurch ragt und in ein Mutterelement auf der dem ersten Bauteil abgewandten Seite des zweiten Bauteils eingreift.

30. Kombination nach Anspruch 26 oder 27, **gekennzeichnet durch** einen Bolzen (64), dessen Kopfteil auf der dem ersten Bauteil (14) abgewandten Seite des zweiten Bauteils (30) angeordnet ist und dessen Schaftteil sich **durch** das zweite Bauteil (30) und in die Verbindungseinrichtung (10) erstreckt und in einem Gewinde (28) eingeschraubt ist, daß sich entweder zwischen dem ersten und zweiten Bauteil (14, 30) in der Verbindungseinrichtung oder auf der dem zweiten Bauteil (30) abgewandten Seite des ersten Bauteils (14) befindet.

31. Kombination nach Anspruch 26 oder 27, **dadurch gekennzeichnet, daß** die Verbindungseinrichtung einen Schaftteil aufweist, der durch das erste Bauteil hindurch ragt und in ein Mutterelement auf der dem zweiten Bauteil abgewandten Seite des ersten Bauteils eingreift.

32. Verfahren zur Herstellung einer Verbindung zwischen einem ersten und einem zweiten Blechteil (14, 30) unter Anwendung der Verbindungseinrichtung (10) nach einem der vorhergehenden Ansprüche, **gekennzeichnet durch** die folgenden Schritte :
a) Durchführung einer umformtechnische Verbindung (11) des erstgenannten Endes der Verbindungseinrichtung mit dem ersten Blechteil (14),
b) Einführung des vom ersten Ende beabstandeten Bereiches (18) der Verbindungseinrichtung (10) **durch** ein Loch im zweiten Blechteil (30),
c) Befestigung der Verbindungseinrichtung (10) mit dem zweiten Blechteil (30) im beabstandeten Bereich, und
d) ggf. Herstellung einer anderweitigen Verbindung wie bspw. eine Schweißverbindung und/oder eine Verklebung zwischen den beiden Blechteilen an einer Stelle oder an mehreren Stellen entfernt von der Verbindungseinrichtung, wobei der Schritt d) entweder vor oder nach dem Schritt c) durchgeführt werden kann.

33. Verfahren nach Anspruch 32, **dadurch gekennzeichnet, daß** der Schritt a) entweder das Vorlochen des ersten Blechteils (14) umfaßt oder unter Anwendung einer selbststanzenden Ausbildung am erstgenannten Ende (12) der Verbindungseinrichtung (10) durchgeführt wird.

34. Verfahren nach Anspruch 32, **dadurch gekennzeichnet, daß** der Schritt c) die Durchführung einer Nietverbindung umfaßt.

35. Verfahren nach Anspruch 34, **dadurch gekennzeichnet, daß** die Nietverbindung nach Art einer Blindnietverbindung unter Anwendung eines die Vernietung durchführenden Dorns (72) durchgeführt wird, wobei das Anziehen des Dorns zur Herstellung der Nietverbindung vor oder nach dem Schritt d) durchgeführt wird.

36. Verfahren nach Anspruch 32, **dadurch gekennzeichnet, daß** es unter Anwendung einer Verbindungseinrichtung (11) bestehend aus zwei Elementen (12A, 18A) durchgeführt wird, wobei bei Schritt a) das erste Element (12A) an dem ersten Blechteil (14) angebracht wird, im Schritt b) das zweite Element (18A) in das zweite Blechteil (30) eingeführt wird und die Verbindung der beiden Elemente (12A, 18A) miteinander entweder durch die Einführung eines Bolzens durch das eine Element (12A, 18A) in das andere Element (18A, 12A) oder durch die Anbringung einer Mutter auf ein mit Gewinde versehenen Schaftteil des einen Elements erfolgt, wobei in diesem Fall das Schaftteil des einen Elements durch eine Bohrung des weiteren Elementes sich hindurch erstreckt, oder dadurch, daß eine Schraube durch beide Elemente hindurchgeführt wird und mit einer Mutter gesichert wird, wobei Bereiche des ersten und zweiten Elementes, die sich zwischen dem ersten und zweiten Blechteil befinden, ein Distanzrohr zwischen diesen beiden Bauteilen bilden.

37. Verfahren nach Anspruch 32 unter Anwendung einer Verbindungseinrichtung (10), die aus drei Elementen (12A, 18A, 112) besteht, wobei zur Durchführung von Schritt a) das erste Element (12A) mit dem ersten Blechteil (14) umformtechnisch verbunden wird, zur Durchführung der Schritte b) und c) das zweite Element (18A) am zweiten Blechteil (30) befestigt wird, und in einem weiteren Schritt, der zu einem beliebigen Zeitpunkt vor dem Schritt c) durchführbar ist, das dritte Element (112) der Verbindungseinrichtung, das als Distanzteil ausgebildet ist, zwischen dem ersten und zweiten Element (12A, 18A) eingesetzt wird.

## Claims

1. A fastener device (10) which can be fixed at one end (12) to a first component (14) by means of a joint (11) which can be produced by a forming technique, preferably a riveted joint, and which has a receiving region (28) configured to receive a bolt (64), a nut or another element, for example a bayonet part or a shaft, **characterized in that** the fastener device is configured in a region (18) spaced from the first said end (12) for frictional attachment or attachment by a forming technique onto or into a second component (30), with the receiving region (28) allowing the attachment of a further component (60) after completion of a joint with the first component (14) and the attachment of the second component (30).

2. A fastener device (10) in accordance with claim 1, **characterized in that** the spaced region is provided at the end (18) of the fastener device opposite the first said end (12).

3. A fastener device (10) in accordance with claim 1 or claim 2, **characterized in that** the spaced region (18) is configured as a blind rivet sleeve (70).

4. A fastener device (10) in accordance with one of the preceding claims, **characterized in that** the spaced region (18) is configured for attaching by a forming technique to a second component (30) or to a further region of the first said component (14).

5. A fastener device (10) in accordance with one of the preceding claims, **characterized in that** it is made in one part.

6. A fastener device (10) in accordance with one of the preceding claims 1 to 4, **characterized in that** it is made in a plurality of parts (12A, 18A; 12A, 112, 18A).

7. A fastener device (10) in accordance with claim 6, **characterized in that** it consists of a first fastener element (12A) which can be fixed to the first said component (14) in the head region and leads into or onto a bar-shaped part (112) and which is optionally bonded or welded thereto or fixed thereto by means of a pinched joint or by means of any other joint, with the bar-shaped part (112) being attachable to the second component (30) at its end opposite the head part of the fastener element (12A) either directly or via a further fastener element, with in the latter case the bar-shaped part possibly being bonded, welded or preferably fixed to the further fastener element (18A) by means of a form-locked and/or frictional joint, for example a pinched joint, with one (18A) of the two fastener elements (12A, 18A) preferably having a thread part (28) (female thread or male thread) and the other (12A) a through bore.

8. A fastener device (10) in accordance with one of the preceding claims, **characterized in that** it or a possible bar-shaped part (112) is made as a spacer tube.

9. A fastener device (10) in accordance with claim 8, **characterized in that** the spacer tube is equipped with a female thread preferably arranged adjacent to one of the ends of the fastener device.

10. A fastener device (10) in accordance with one of the preceding claims, **characterized in that** the two ends of the fastener device are arranged offset relative to one another (Fig. 24), for example by the use of a cranked bar-shaped part or spacer tube.

11. A fastener device (10) in accordance with one of the preceding claims, **characterized in that** it has a female thread (28) or a male thread for attaching a third component (60) by means of a bolt (64) or a nut.

12. A fastener device (10) in accordance with one of the preceding claims, **characterized in that** the joint (11) which can be made by a forming technique is configured for use with a pre-punched component (14; 30), for example using a fastener device having rivet features of the kind of the RND, RSN, RSF, RSK, RSU, HI or UM nut elements or using a fastener device having shape features of the kind of the EBF, SBK or SBF bolt elements of the company of Profil Verbindungstechnik GmbH & Co. KG.

13. A fastener device (10) in accordance with one of the preceding claims 1 to 11, **characterized in that** the joint (11) which can be made by a forming technique is configured for use with a non pre-punched component (14, 30), for example using a fastener device having integrated pre-punching, while utilizing a fastener device having shape features of the kind of the RSK or RSU nut elements of the company of Profil Verbindungstechnik GmbH & Co. KG or using a fastener device having self-piercing features, for example of the kind of the UM, HI, RSF nut elements or EBF bolt elements (in the self-piercing version) or SBK or SBF bolt elements of the company of Profil Verbindungstechnik GmbH & Co. KG.

14. A fastener device (10) in accordance with one of the preceding claims, **characterized in that** the first component (14) and/or the second component (30) are provided with cup-like recesses (115) in the region of the attaching position of the fastener device (10).

15. A fastener device (10) in accordance with claim 6 and one or more of the further, preceding claims, **characterized in that** a nut element (12A) having rivet or pierce and rivet features (22) is used to create the joint (11) made by a forming technique to the first component (14) and the nut element either has a thread (28) as usual or is provided with a through bore instead of a thread.

16. A fastener device in accordance with claim 6 and one or more of the preceding claims, **characterized in that** when a bolt element is used to create the joint made by a forming technique to the first component, the shaft part of the bolt element is either made hollow or has a solid design and is supplemented by a separate spacer tube and, where required, a nut at the side of the first component facing the second component, wherein, when a bolt element with a hollow shaft part is used, the male thread of the shaft part is capable of being screwed into a female thread of the spacer tube, and the attaching of the third component is effected via a screw which is led through the first component, the hollow shaft part and the spacer tube and which can be screwed either into a thread in the spacer tube at its end remote from the first component, or into a thread in an element attached to the end of the spacer tube remote from the first component and joined to the second component by a forming technique or into a nut at the side of the second component remote from the first component wherein when a bolt element with a solid shaft part is used, the latter can be screwed either into a female thread having a spacer tube, with the attaching of a third component then being effected on the side of the second component remote from the first component by means of a screw which engages into a female thread in the spacer tube, or projects through the spacer tube and the second component and cooperates there with a separate nut arranged on the side of the second component remote from the first component for attaching a third component.

17. A fastener device in accordance with claim 8, **characterized in that** the spacer tube (112) is provided at its end or at both ends with a nose or a plurality of noses configured to engage into one or more corresponding recesses at the joint position associated with the spacer tube at the first and/or second component (14, 30).

18. A fastener device (10) in accordance with claim 3, **characterized in that** the fastener device (10) is equipped with a mandrel (72) with a pre-determined position of fracture (78) whose head (76) is configured to deform the blind rivet sleeve (70) when tensile forces are applied to the shaft part (74) of the mandrel (72), with the head part (76) of the mandrel being configured either for removal from the region of the fastener device (10) after the deforming of the blind rivet sleeve (70) or for a form-locked and/or frictional retention with the fastener device (10) by the provision of shape features such as an undercut in the shaft part adjacent to the head.

19. A fastener device (10) in accordance with claim 3 and claim 18, **characterized in that** the blind rivet sleeve (70) merges into a shoulder (82) arranged in the region of the side of the second component (30) facing the first component (14).

20. A fastener device (10) in accordance with claim 19, **characterized in that** a second shoulder (84) is arranged between the blind rivet sleeve (70) and the first shoulder (80) and has a diameter which is greater than the outer diameter of the blind rivet sleeve (70), but smaller than the outer diameter of the first shoulder (82), and has a height which corresponds preferably at least approximately to the thickness of the second component (30) in the region of the rivet sleeve.

21. A fastener device (10) in accordance with claim 19 or claim 20, **characterized in that** it is configured for use with a pre-punched second component (30) whose aperture is provided with an at least substantially conical collar (90) protruding at the side of the second component (30) remote from the first component (14) and **in that** the blind rivet sleeve (70) and the mandrel (72) of the fastener device are configured to press the collar (90) at least substantially flat via the blind rivet sleeve (70) when the mandrel (72) is tightened in accordance with the procedure in the performance of the so-called fastening hole riveting method (EP 0 539 793).

22. A fastener device (10) in accordance with one of claims 3 and 18 to 21, **characterized in that** a thread (28) is provided in the fastener device between the rivet sleeve (70) and the first component (14) to receive a screw inserted from the side of the first component remote from the rivet sleeve and preferably has a core diameter which is somewhat larger than the outer diameter of the shaft part (74) of the mandrel (72).

23. A fastener device (10) in accordance with one of claims 3 and 18 to 22, **characterized in that** the shaft part (74) of the mandrel (72) is provided with shape features to allow a reliable grip of a pulling tool.

24. A fastener device (10) in accordance with one or more of the preceding claims, **characterized in that** the formable ends (12, 18) of the fastener device are configured to generate a media-tight joint with the first and/or second component (14, 30), with, where required, thermally stable adhesives being able to be used during the insertion of the fastener device to ensure gas-tight joints.

25. A fastener device (10) in accordance with one of the preceding claims 1 to 24, which has a female thread (28) to receive a bolt (64) and a tubular region (112), with the inner diameter of the tubular region being greater than the outer diameter of the bolt (64), **characterized in that** a conical insertion aid is provided in the tubular region in front of the thread or **in that** a centering sleeve is provided.

26. A combination of a fastener device (10) in accordance with one of the preceding claims and a component (14) or two or three components (14, 30; 14, 30, 60), **characterized in that** the joint (11) which can be made by a forming technique is configured for use with a pre-punched component (14), for example using a fastener device having rivet features of the kind of the RND, RSN, RSF, RSK, RSU, HI or UM nut elements or using a fastener device having shape features of the kind of the EBF, SBK or SBF bolt elements of the company of Profil Verbindungstechnik GmbH & Co. KG.

27. A combination in accordance with claim 26, **characterized in that** the joint (11) which can be made by a forming technique is configured for use with a non pre-punched component (14), for example while utilizing a fastener device (10) having integrated pre-punching, using a fastener device having shape features of the kind of the RSK or RSU nut elements of the company of Profil Verbindungstechnik GmbH & Co. KG or using a fastener device having self-piercing features, for example of the kind of the UM, HI, RSF nut elements or EBF bolt elements (in the self-piercing version) or SBK or SBF bolt elements of the company of Profil Verbindungstechnik GmbH & Co. KG.

28. A combination in accordance with claim 26 or claim 27, **characterized by** a bolt (64) whose head part is arranged on the side of the first component (14) remote from the second component (30) and whose shaft part extends through the first component and into the fastener element (10) and is screwed into a thread (28) which is located either between the first and second components in the fastener device (10) or on the side of the second component (30) remote from the first component (14).

29. A combination in accordance with claim 26 or claim 27, **characterized in that** the fastener device has a shaft part which projects through the second component and engages in a nut element on the side of the second component remote from the first component.

30. A combination in accordance with claim 26 or claim 27, **characterized by** a bolt (64) whose head part is arranged on the side of the second component (30) remote from the first component (14) and whose shaft part extends through the second component (30) and into the fastener element (10) and is screwed in a thread (28) which is located either between the first and second components (14, 30) in the fastener device or on the side of the first component (14) remote from the second component (30).

31. A combination in accordance with claim 26 or claim 27, **characterized in that** the fastener device has a shaft part which projects through the first component and engages in a nut element on the side of the first component remote from the second component.

32. A method of making a joint between a first and a second sheet metal part (14, 30) using the fastener device (10) in accordance with one of the preceding claims, **characterized by** the following steps:
a) making of a joint (11) by a forming technique between the first said end of the fastener device and the first sheet metal part (14);
b) introduction of the region (18) of the fastener device (10) spaced from the first end through a hole in the second sheet metal part (30);
c) fastening of the fastener device (10) to the second sheet metal part (30) in the spaced region; and
d) optionally making another type of joint such as a weld joint and/or a bond between the two sheet metal parts at one or more positions remote from the fastener device, with step d) being able to be performed either before or after step c).

33. A method in accordance with claim 32, **characterized in that** step a) comprises either the pre-punching of the first sheet metal part (14) or is performed using a self-piercing design at the first said end (12) of the fastener device (10).

34. A method in accordance with claim 32, **characterized in that** step c) comprises the making of a rivet joint.

35. A method in accordance with claim 34, **characterized in that** the rivet joint is performed in the manner of a blind rivet joint using a mandrel (72) performing the riveting, with the tightening of the mandrel being performed to make the rivet joint before or after step d).

36. A method in accordance with claim 32, **characterized in that** it is performed using a fastener device (11) consisting of two elements (12A, 18A), with the first element (12A) being attached to the first sheet metal part (14) in step a), the second element (18A) being inserted into the second sheet metal part (30) in step b) and the joining of the two elements (12A, 18A) to one another being effected either by the insertion of a bolt through the one element (12A, 18A) into the other element (18A, 12A) or by fixing a nut to a shaft part of the one element provided with a thread, with, in this case, the shaft part of the one element extending through a bore of the other element or by a screw being led through both elements and being secured with a nut, with regions of the first and second elements located between the first and second sheet metal parts forming a spacer tube between these two sheet metal parts.

37. A method in accordance with claim 32 using a fastener device (10) which consists of three elements (12A, 18A, 112), with the first element (12A) being joined to the first sheet metal part (14) in a forming technique to perform step a), the second element (18A) being fastened to the second sheet metal part (30) to perform steps b) and c), and the third element (112) of the fastener device, which is formed as a spacer tube, being inserted between the first and second elements (12A, 18A) in a further step which can be performed at any time prior to step c).

## Revendications

1. Dispositif d'assemblage (10) qui est susceptible d'être fixé, à l'une de ses extrémités (12), sur un premier composant (14) via une jonction (11) réalisable par déformation, de préférence une jonction rivetée, et qui comprend une zone de réception (28) qui est conçue pour recevoir un boulon (64), un écrou ou un autre élément, par exemple une partie de baïonnette ou un arbre, **caractérisé en ce que** le dispositif d'assemblage est conçu, dans une zone (18) à distance de ladite première extrémité (12), pour l'agencement par coopération de friction ou par déformation sur ou dans un deuxième composant (30), et après établissement d'une jonction avec le premier composant (14) et après agencement du deuxième composant (30), la zone de réception (28) permet l'agencement d'un autre composant (60).

2. Dispositif d'assemblage (10) selon la revendication 1, **caractérisé en ce que** la zone éloignée est prévue à l'extrémité (18) du dispositif d'assemblage opposée à ladite première extrémité (12).

3. Dispositif d'assemblage (10) selon l'une ou l'autre des revendications 1 et 2, **caractérisé en ce que** la zone éloignée (18) est conçue sous forme de douille de rivet aveugle (70).

4. Dispositif d'assemblage (10) selon l'une des revendications précédentes, **caractérisé en ce que** la zone éloignée (18) est conçue pour l'agencement par déformation sur un deuxième composant (30) ou sur une autre zone dudit premier composant (14).

5. Dispositif d'assemblage (10) selon l'une des revendications précédentes, **caractérisé en ce qu'**il est réalisé en une seule pièce.

6. Dispositif d'assemblage (10) selon l'une des revendications 1 à 4, **caractérisé en ce qu'**il est réalisé en plusieurs pièces (12A, 18A ; 12A, 112, 18A).

7. Dispositif d'assemblage (10) selon la revendication 6, **caractérisé en ce qu'**il est constitué par un premier élément de jonction (12A) qui est susceptible d'être fixé dans la zone de tête sur ledit premier composant (14) et qui mène dans ou sur une pièce (112) en forme de barre et qui est le cas échéant collé, soudé ou fixé via une jonction sertie ou via une autre jonction sur celle-ci, la pièce (12A) en forme de barre étant susceptible d'être agencée, à son extrémité opposée à la pièce de tête de l'élément de jonction (12A), sur le deuxième composant (30) soit immédiatement soit via un autre élément de jonction, et dans ce dernier cas, la pièce en forme de barre est le cas échéant collée, soudée ou fixée de préférence via une jonction en coopération de formes et/ou de forces sur l'autre élément de jonction (18A), par exemple via une jonction sertie, et de préférence l'un (18A) des deux éléments de jonction (12A, 18A) présente une partie à pas de vis (28) (taraudage ou filetage) et l'autre (12A) présente un perçage traversant.

8. Dispositif d'assemblage (10) selon l'une des revendications précédentes, **caractérisé en ce que** celui-ci ou une pièce éventuelle (112) en forme de barre est réalisé(e) sous forme de tube d'écartement.

9. Dispositif d'assemblage (10) selon la revendication 8, **caractérisé en ce que** le tube d'écartement est muni d'un taraudage qui est agencé de préférence au voisinage de l'une des extrémités du dispositif d'assemblage.

10. Dispositif d'assemblage (10) selon l'une des revendications précédentes, **caractérisé en ce que** les deux extrémités du dispositif d'assemblage sont agencées en décalage l'une par rapport à l'autre (figure 24), par exemple par utilisation d'une pièce en forme de barre coudée ou d'un tube d'écartement.

11. Dispositif d'assemblage (10) selon l'une des revendications précédentes, **caractérisé en ce qu'**il comprend un taraudage (28) ou un filetage pour agencer un troisième composant (60) au moyen d'un boulon (64) ou d'un écrou.

12. Dispositif d'assemblage (10) selon l'une des revendications précédentes, **caractérisé en ce que** la jonction (11) réalisable par déformation est conçue pour l'utilisation avec un composant pré-perforé (14 ; 30), par exemple en utilisant un dispositif d'assemblage comportant des caractéristiques de rivetage à la manière des éléments formant écrou RND, RSN, RSF, RSK, RSU, HI ou UM, ou en utilisant un dispositif d'assemblage comprenant des caractéristiques de forme à la manière des éléments formant boulon EBF, SBK ou SBF de la société Profil Verbindungstechnik GmbH & Co. KG.

13. Dispositif d'assemblage (10) selon l'une des revendications 1 à 11, **caractérisé en ce que** la jonction (11) réalisable par déformation est conçue pour l'utilisation avec un composant non pré-perforé (14, 30), par exemple en utilisant un dispositif d'assemblage avec pré-perforation intégrée, en utilisant un dispositif d'assemblage comportant des caractéristiques de forme à la manière des éléments formant écrou, RSK ou RSU de la société Profil Verbindungstechnik GmbH & Co. KG, ou en utilisant un dispositif d'assemblage comprenant des caractéristiques d'auto-poinçonnage par exemple à la manière des éléments formant écrou UM, HI, RSF ou des éléments formant boulon EBF (en réalisation à auto-poinçonnage) ou SBK ou SBF de la société Profil Verbindungstechnik GmbH & Co. KG.

14. Dispositif d'assemblage (10) selon l'une des revendications précédentes, **caractérisé en ce que** le premier composant (14) et/ou le deuxième composant (30) est/sont pourvu(s) de dépressions (115) en forme de pot dans la zone de l'emplacement d'agencement du dispositif d'assemblage (10).

15. Dispositif d'assemblage (10) selon la revendication 6 et l'une ou plusieurs des autres revendications précédentes, **caractérisé en ce qu'**un élément formant écrou (12A) comportant des caractéristiques de rivetage ou de poinçonnage et de rivetage (22) est utilisé pour réaliser la jonction (11) par déformation avec le premier composant (14), et **en ce que** l'élément formant écrou comprend un filetage (28), comme d'habitude, ou bien est pourvu d'un perçage traversant à la place du filetage.

16. Dispositif d'assemblage (10) selon la revendication 6 et l'une ou plusieurs des revendications précédentes, **caractérisé en ce que**, lors de l'utilisation d'un élément formant boulon pour réaliser la jonction par déformation avec le premier composant, la partie de tige de l'élément formant boulon est réalisée creuse ou bien présente une réalisation massive et est complétée par un tube d'écartement séparé et le cas échéant par un écrou sur le côté du premier composant tourné vers le deuxième composant, et lors de l'utilisation d'un élément formant boulon avec une partie de tige creuse, le filetage de la partie de tige est susceptible d'être vissé dans un taraudage du tube d'écartement et l'agencement du troisième composant s'effectue via une vis traversant le premier composant, la partie de tige creuse et le tube d'écartement, vis qui peut être vissée soit dans un taraudage dans le tube d'écartement à son extrémité détournée du premier composant, soit dans un taraudage dans un élément agencé à l'extrémité du tube d'écartement détournée du premier composant et relié par déformation au deuxième composant, soit dans un écrou sur le côté du deuxième composant détourné du premier composant, et lors de l'utilisation d'un élément formant boulon avec partie de tige massive, celle-ci est susceptible d'être vissée soit dans un taraudage avec tube d'écartement, l'agencement d'un troisième composant s'effectuant alors sur le côté du deuxième composant détourné du premier composant au moyen d'une vis qui s'engage dans un taraudage dans le tube d'écartement, soit elle traverse le tube d'écartement et le deuxième composant et coopère ici, pour agencer un troisième composant, avec un écrou séparé agencé sur le côté du deuxième composant détourné du premier composant.

17. Dispositif d'assemblage selon la revendication 8, **caractérisé en ce que** le tube d'écartement (112) est pourvu à une extrémité frontale ou aux deux extrémités frontales d'un ergot ou de plusieurs ergots qui sont conçus pour venir s'engager dans une ou dans plusieurs dépressions correspondantes à l'emplacement de jonction associé au tube d'écartement sur le premier et/ou sur le deuxième composant (14, 30).

18. Dispositif d'assemblage (10) selon la revendication 3, **caractérisé en ce que** le dispositif d'assemblage (10) est muni d'un mandrin (72) à emplacement destiné à la rupture (78) dont la tête (76) est conçue pour déformer la douille de rivet aveugle (70) lorsque des forces de traction sont exercées sur la partie de tige (74) du mandrin (72), la partie de tête (76) du mandrin étant conçue soit pour l'enlèvement hors de la zone du dispositif d'assemblage (10) après déformation de la douille de rivet aveugle (70) soit par agencement de caractéristiques de forme, par exemple une contre-dépouille dans la partie de tête au voisinage de la tête pour le maintien par coopération de formes et/ou de forces avec le dispositif d'assemblage (10).

19. Dispositif d'assemblage (10) selon les revendications 3 et 18, **caractérisé en ce que** la douille de rivet aveugle (70) se transforme en un épaulement (82) agencé dans la zone du côté du premier composant (30) tourné vers le premier composant (14).

20. Dispositif d'assemblage (10) selon la revendication 19, **caractérisé en ce qu'**un deuxième épaulement (84) est agencé entre la douille de rivet aveugle (70) et le premier épaulement (80) et présente un diamètre supérieur au diamètre extérieur de la douille de rivet aveugle (70), mais inférieur au diamètre extérieur du premier épaulement (82) et présente une hauteur qui correspond de préférence au moins approximativement à l'épaisseur du deuxième composant (30) dans la zone de la douille de rivet.

21. Dispositif d'assemblage (10) selon l'une ou l'autre des revendications 19 et 20, **caractérisé en ce qu'**il est conçu pour l'utilisation avec un deuxième composant pré-perforé (30), dont la perforation est pourvue d'une collerette (90) au moins sensiblement conique et en saillie sur le côté du deuxième composant (30) détourné du premier composant (14), et **en ce que** la douille de rivet aveugle (70) et le mandrin (72) du dispositif d'assemblage sont conçus pour presser au moins sensiblement à plat la collerette (90) sur la douille de rivet aveugle (70) lors du serrage du mandrin (72), et en correspondance du mode opératoire lors de la mise en oeuvre du procédé dit de rivetage à trou de fixation (EP 0 539 793).

22. Dispositif d'assemblage (10) selon l'une des revendications 3 et 18 à 21, **caractérisé en ce qu'**il est prévu dans le dispositif d'assemblage, entre la douille de rivet (70) et le premier composant (14), un taraudage (28) pour recevoir une vis introduite depuis le côté du premier composant détourné de la douille de rivet, qui présente de préférence un diamètre de noyau qui est légèrement supérieur au diamètre extérieur de la partie de tige (74) du mandrin (72).

23. Dispositif d'assemblage (10) selon l'une des revendications 3 et 18 à 22, **caractérisé en ce que** la partie de tige (74) du mandrin (72) est pourvue de caractéristiques de forme pour permettre une attaque sûre par un outil de traction.

24. Dispositif d'assemblage (10) selon l'une ou plusieurs des revendications précédentes, **caractérisé en ce que** les extrémités déformables (12, 18) du dispositif d'assemblage (10) sont conçues pour une jonction étanche aux fluides avec le premier et/ou le deuxième composant (14, 30), en pouvant utiliser le cas échéant des colles thermiquement stables pour assurer des jonctions étanches aux gaz, lors de la mise en place du dispositif d'assemblage.

25. Dispositif d'assemblage (10) selon l'une des revendications 1 à 24, qui comprend un taraudage (28) pour recevoir un boulon (64) et une zone tubulaire (112), le diamètre intérieur de la zone tubulaire étant supérieur au diamètre extérieur du boulon (64), **caractérisé en ce qu'**il est prévu, dans la zone tubulaire, un auxiliaire d'introduction conique en avant du taraudage, ou bien une douille de centrage.

26. Combinaison d'un dispositif d'assemblage (10) selon l'une des revendications précédentes avec un composant (14) ou avec deux ou trois composants (14, 30 ; 14, 30, 60), **caractérisée en ce que** la jonction (11) réalisable par déformation est conçue pour l'utilisation avec un composant pré-perforé (14), par exemple en utilisant un dispositif d'assemblage comportant des caractéristiques de rivetage à la manière des éléments formant écrou RND, RSN, RSF, RSK, RSU, HI ou UM, ou en utilisant un dispositif d'assemblage comprenant des caractéristiques de forme à la manière des éléments formant boulon EBF, SBK ou SBF de la société Profil Verbindungstechnik GmbH & Co. KG.

27. Combinaison selon la revendication 26, **caractérisée en ce que** la jonction (11) réalisable par déformation est conçue pour l'utilisation avec un composant non pré-perforé (14), par exemple en utilisant un dispositif d'assemblage (10) avec pré-perforation intégrée, en utilisant un dispositif d'assemblage comportant des caractéristiques de forme à la manière des éléments formant écrou, RSK ou RSU de la société Profil Verbindungstechnik GmbH & Co. KG, ou en utilisant un dispositif d'assemblage comprenant des caractéristiques d'auto-poinçonnage par exemple à la manière des éléments formant écrou UM, HI, RSF ou des éléments formant boulon EBF (en réalisation à auto-poinçonnage) ou SBK ou SBF de la société Profil Verbindungstechnik GmbH & Co. KG.

28. Combinaison selon l'une ou l'autre des revendications 26 et 27, **caractérisée par** un boulon (64) dont la partie de tête est agencée sur le côté du premier composant (14) détourné du deuxième composant (30), et dont la partie de tige s'étend à travers le premier composant et jusque dans le dispositif d'assemblage et est visée dans un taraudage (28) qui se trouve soit entre le premier et le deuxième composant dans le dispositif d'assemblage (10), soit sur le côté du deuxième composant (30) détourné du premier composant (14).

29. Combinaison selon l'une ou l'autre des revendications 26 et 27, **caractérisée en ce que** le dispositif d'assemblage comprend une partie de tige qui traverse le deuxième composant et qui s'engage dans un élément formant écrou sur le côté du deuxième composant détourné du premier composant.

30. Combinaison selon l'une ou l'autre des revendications 26 et 27, **caractérisée par** un boulon (64) dont la partie de tête est agencée sur le côté du deuxième composant (30) détourné du premier composant (14) et dont la partie de tige s'étend à travers le deuxième composant (30) et jusque dans le dispositif d'assemblage (10) et est vissée dans un taraudage (28) qui se trouve soit entre le premier et le deuxième composant (14, 30) dans le dispositif d'assemblage soit sur le côté du premier composant (14) détourné du deuxième composant (30).

31. Combinaison selon l'une ou l'autre des revendications 26 et 27, **caractérisée en ce que** le dispositif d'assemblage comprend une partie de tige qui traverse le premier composant et qui s'engage dans un élément formant écrou sur le côté du premier composant détourné du deuxième composant.

32. Procédé pour réaliser une jonction entre une première et une deuxième pièce en tôle (14, 30) en utilisant le dispositif d'assemblage (10) selon l'une des revendications précédentes, **caractérisé par** les étapes suivantes :
a) réalisation d'une jonction (11) par déformation de ladite première extrémité du dispositif d'assemblage avec la première pièce en tôle (14),
b) introduction de la zone (18) du dispositif d'assemblage (10) écartée de la première extrémité à travers un trou dans la deuxième pièce en tôle (30),
c) fixation du dispositif d'assemblage (10) avec la deuxième pièce en tôle (30) dans la zone écartée, et
d) le cas échéant réalisation d'une autre jonction, comme par exemple par soudage et/ou par collage entre les deux pièces en tôle à un emplacement ou à plusieurs emplacements en éloignement du dispositif d'assemblage, l'étape d) pouvant être effectuée soit avant soit après l'étape c).

33. Procédé selon la revendication 32, **caractérisé en ce que** soit l'étape a) comprend la pré-perforation de la première pièce en tôle (14) soit elle est effectuée, en utilisant une réalisation à auto-poinçonnage, sur ladite première extrémité (12) du dispositif d'assemblage (10).

34. Procédé selon la revendication 32, **caractérisé en ce que** l'étape c) comprend l'exécution d'une jonction rivetée.

35. Procédé selon la revendication 34, **caractérisé en ce que** la jonction rivetée est exécutée à la manière d'une jonction à rivet aveugle en utilisant un mandrin (72) exécutant le rivetage, le serrage du mandrin pour réaliser la liaison rivetée étant effectué avant ou après l'étape d).

36. Procédé selon la revendication 32, **caractérisé en ce que** ce qu'il est mis en oeuvre en utilisant un dispositif d'assemblage (11) constitué par deux éléments (12A, 18A), dans lequel le premier élément (12A) est agencé sur la première pièce en tôle (14) dans l'étape a), le deuxième élément (18A) est introduit dans la deuxième pièce en tôle (30) dans l'étape b), et la jonction des deux éléments (12A, 18A) l'un avec l'autre s'effectue soit par introduction d'un boulon à travers l'un des éléments (12A, 18A) dans l'autre élément (18A, 12A), soit par agencement d'un écrou sur une partie de tige de l'un des éléments pourvue d'un filetage, et dans ce cas, la partie de tige de l'un des éléments s'étend à travers un perçage de l'autre élément, soit encore du fait qu'une vis traverse les deux éléments et est bloquée au moyen d'un écrou, des zones du premier et du deuxième élément qui se trouvent entre la première et la deuxième pièce en tôle, formant un tube d'écartement entre ces deux composants.

37. Procédé selon la revendication 32 en utilisant un dispositif d'assemblage (10) qui est constitué par trois éléments (12A, 18A, 112), dans lequel le premier élément (12A) est relié par déformation avec la première pièce en tôle (14) pour exécuter l'étape a), le deuxième élément (18A) est fixé sur la deuxième pièce en tôle (30) pour exécuter les étapes b) et c), et dans une autre étape qui peut être exécutée à un instant quelconque avant l'étape c), le troisième élément (12) du dispositif d'assemblage, qui est réalisé sous forme d'élément d'écartement, est mis en place entre le premier et le deuxième élément (12A, 18A).
